(19) Europäisches Patentamt / European Patent Office / Office européen des brevets

(11) **EP 3 351 986 B1**

(12) **EUROPEAN PATENT SPECIFICATION**

(45) Date of publication and mention
of the grant of the patent:
**27.12.2023 Bulletin 2023/52**

(21) Application number: **18000031.7**

(22) Date of filing: **16.01.2018**

(51) International Patent Classification (IPC):
**G02B 15/14** *(2006.01)*

(52) Cooperative Patent Classification (CPC):
**G02B 15/1441; G02B 15/145117;
G02B 15/145125; G02B 15/145129; G02B 15/1461**

(54) **ZOOM LENS, AND IMAGE PICKUP APPARATUS**

ZOOMOBJEKTIV UND BILDAUFNAHMEVORRICHTUNG

LENTILLE DE ZOOM ET APPAREIL DE SÉLECTION D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2017 JP 2017007596**

(43) Date of publication of application:
**25.07.2018 Bulletin 2018/30**

(73) Proprietor: **CANON KABUSHIKI KAISHA
Tokyo (JP)**

(72) Inventor: **Sakamoto, Masaru
Tokyo (JP)**

(74) Representative: **WESER & Kollegen
Patentanwälte PartmbB
Radeckestraße 43
81245 München (DE)**

(56) References cited:
**EP-A1- 1 887 401      EP-A1- 2 386 895
JP-A- 2011 081 063     US-A1- 2015 247 996**

**Description**

BACKGROUND OF THE INVENTION

Field of the Invention

The present invention relates to a zoom lens, and an image pickup apparatus.

Description of the Related Art

In recent years, an image pickup apparatus such as a television camera, a silver halide film camera, a digital camera and a video camera has been desired to be provided with a zoom lens which has a wide angle of view, a high zoom ratio, and a high optical performance besides. As for the zoom lens having a large aperture ratio, the wide angle of view and the high zoom ratio, a positive-lead type of zoom lens is known which has a lens unit having a positive refractive power arranged closest to the object side, and makes a part of a first unit adjust the focus. In addition, as for a zooming method, a zoom lens is known which includes in order from an object side, a first lens unit that has a positive refractive power and is fixed during zooming, a second lens unit that has a negative refractive power and moves for zooming, and a lens unit for imaging, which is fixed during zooming in the side closest to the image plane.

Japanese Patent Application Laid-Open No. 2011-81063 proposes a high magnification zoom lens that has a zoom ratio of approximately 40 and an angle of view of approximately 27 degrees at a wide angle end.

In the above described positive lead type zoom lens, in order to achieve both high magnification and high optical performance at the telephoto side while keeping miniaturization and the widening of the angle of view, it becomes important to appropriately set the configuration, the refractive power and the focusing method of the first lens unit. Unless these configurations are appropriately set, it becomes difficult to obtain a zoom lens which has the wide angle of view, the high magnification and the high optical performance at the telephoto end.

In the zoom lens disclosed in Japanese Patent Application Laid-Open No. 2011-81063, an axial chromatic aberration during zooming and various aberrations in the periphery of the telephoto end have tended to increase along with an increase of magnification. US 2012/0218645 A1 discloses another prior art zoom lens.

SUMMARY OF THE INVENTION

The present invention provides, for example, a zoom lens advantageous in a wide angle of view, a high zoom ratio, and a high optical performance at a telephoto end thereof.

The present invention provides a zoom lens according to claim 1.

The other claims relate to further developments.

Further features of the present invention will become apparent from the following description of exemplary embodiments with reference to the attached drawings.

BRIEF DESCRIPTION OF THE DRAWINGS

FIG. 1 is a sectional view of lenses at the time when a zoom lens in Numerical Embodiment 1 focuses on an infinite object at a wide angle end.

FIG. 2A is an aberration diagram at the time when the zoom lens in Numerical Embodiment 1 focuses on an infinite object at a wide angle end.

FIG. 2B is an aberration diagram at the time when the zoom lens in Numerical Embodiment 1 focuses on an infinite object at a telephoto end.

FIG. 3 is a sectional view of lenses at the time when a zoom lens in Numerical Embodiment 2 focuses on an infinite object at a wide angle end.

FIG. 4A is an aberration diagram at the time when the zoom lens in Numerical Embodiment 2 focuses on an infinite object at a wide angle end.

FIG. 4B is an aberration diagram at the time when the zoom lens in Numerical Embodiment 2 focuses on an infinite object at a telephoto end.

FIG. 5 is a sectional view of lenses at the time when a zoom lens in Numerical Embodiment 3 focuses on an infinite object at a wide angle end.

FIG. 6A is an aberration diagram at the time when the zoom lens in Numerical Embodiment 3 focuses on an infinite object at a wide angle end.

FIG. 6B is an aberration diagram at the time when the zoom lens in Numerical Embodiment 3 focuses on an infinite object at a telephoto end.

FIG. 7 is a sectional view of lenses at the time when a zoom lens in Numerical Embodiment 4 focuses on an infinite object at a wide angle end.

FIG. 8A is an aberration diagram at the time when the zoom lens in Numerical Embodiment 4 focuses on an infinite object at a wide angle end.

FIG. 8B is an aberration diagram at the time when the zoom lens in Numerical Embodiment 4 focuses on an infinite object at a telephoto end.

FIG. 9 is a sectional view of lenses at the time when a zoom lens in Numerical Embodiment 5 focuses on an infinite object at a wide angle end.

FIG. 10A is an aberration diagram at the time when the zoom lens in Numerical Embodiment 5 focuses on an infinite object at a wide angle end.

FIG. 10B is an aberration diagram at the time when the zoom lens in Numerical Embodiment 5 focuses on an infinite object at a telephoto end.

FIG. 11 is a sectional view of lenses at the time when a zoom lens in Numerical Embodiment 6 focuses on an infinite object at a wide angle end.

FIG. 12A is an aberration diagram at the time when the zoom lens in Numerical Embodiment 6 focuses on an infinite object at a wide angle end.

FIG. 12B is an aberration diagram at the time when the zoom lens in Numerical Embodiment 6 focuses on an infinite object at a telephoto end.

FIG. 13 is a sectional view of lenses at the time when a zoom lens in Numerical Embodiment 7 focuses on an infinite object at a wide angle end.

FIG. 14A is an aberration diagram at the time when the zoom lens in Numerical Embodiment 7 focuses on an infinite object at a wide angle end.

FIG. 14B is an aberration diagram at the time when the zoom lens in Numerical Embodiment 7 focuses on an infinite object at a telephoto end.

FIG. 15 is a view for describing an embodiment of an image pickup apparatus of the present invention.

DESCRIPTION OF THE EMBODIMENTS

Numerical Embodiments 4-5 and 7 define embodiments of the claimed invention. Numerical Embodiments 1-3 and 6 are not encompassed by the wording of the claims, but are considered as useful for understanding the invention.

Embodiments will now be described in detail in accordance with the accompanying drawings.

A zoom lens of the present invention includes the features recited in claim 1. An embodiment, useful for understanding the invention, includes, in order from an object side to an image side: a positive first lens unit that does not move for zooming and moves for focusing; a negative second lens unit that moves to an image side for zooming from a wide angle end to a telephoto end; and a relay lens unit that is arranged closest to the image side and does not move for zooming.

The first lens unit includes in order from an object side to an image side, five lenses of negative, positive, positive, positive and positive lenses, or includes in order from the object side to the image side, six lenses of positive, negative, positive, positive, positive and positive lenses.

When a refractive index of the negative lens of the first lens unit is represented by Nn, the Abbe number is represented by vn, a focal length is represented by fn, and a focal length of the first lens unit is represented by f1, the zoom lens satisfies the following conditional expressions:

$$39 < vn < 48 \ ... \ (1),$$

$$2.24 < Nn + 0.01 \times vn < 2.32 \ ... \ (2),$$

$$1.79 < Nn < 1.91 \ ... \ (3),$$

and

$$1.5 < |fn/f1| < 2.0 \ ... \ (4).$$

The Conditional Expressions (1), (2) and (3) specify the characteristics of the optical glass of the negative lenses in the first lens unit. Usually, the optical glass contains many types of metal oxides. The metal oxides include, for instance, $SiO_2$, $TiO_2$, $La_2O_3$, $Al_2O_3$, $Nb_2O_5$, $ZrO_2$ and $Gd_2O_3$. Among them, $TiO_2$, for instance, has an effect of enhancing the refractive index and reducing the Abbe number, and the glass containing a lot of $TiO_2$ has characteristics of comparatively high refractive index and high dispersion. In addition, $Gd_2O_3$ has an effect of enhancing the refractive index and increasing the Abbe number, and the glass containing a lot of $Gd_2O_3$ is known to have comparatively a high refractive index and low dispersion. $TiO_2$ and $Gd_2O_3$ respectively have the high refractive index and high dispersion and the high refractive index and low dispersion, originally, and characteristics of the glass containing the above substances result in approaching to the characteristics of the original metal oxides.

Thus, the optical glass has such properties that the characteristics vary depending on the amount of the component which the optical glass contains, and an optical glass having desired optical characteristics is obtained by appropriately setting the amounts of the components. This is similar in the optical ceramics, and for instance, optical ceramics containing a lot of substance having high refractive index and low dispersion result in having comparatively high refractive index and low dispersion.

As for substances having the high refractive index and low dispersion, there are, for instance, $Gd_2O_3$, $Al_2O_3$ and $Lu_3Al_5O_{12}$. By appropriately setting the amounts of these substances and metal oxides such as $SiO_2$, $TiO_2$ and $La_2O_3$, and dissolving or sintering the substances in each other, optical materials such as optical glass and ceramics having desired optical characteristics (refractive index and Abbe number) can be obtained.

In addition, in the zoom lens having the above described zoom configuration, as the focal length approaches the telephoto side, the height of an on-axis light beam of the first lens unit increases in proportion to the focal length. As the height of this axial ray becomes high, the chromatic aberration occurring in the first lens unit is further enlarged, which leads to the deterioration of performance.

Here, when the amount of chromatic aberration of the first lens unit is represented by Δ1 and the imaging magnification of lenses after the first lens unit is represented by βr, the amount Δ of the chromatic aberration in the whole lens system is expressed by the following expression:

$$\Delta = \Delta 1 \times \beta r^2 + \alpha$$

where α represents a contribution to the chromatic aberration Δ of units other than the first lens unit. The Δ remarkably occurs in the first lens unit in which the axial marginal ray passes through a high position at the telephoto side. Accordingly, the axial chromatic aberration quantity Δ on the telephoto side can be reduced by suppressing the secondary spectral quantity Δ1 of the axial chromatic aberration which occurs in.the first lens unit.

Conditional Expression (1) specifies the condition of the Abbe number of the negative lens which constitutes the first lens unit. If the Abbe number exceeds the lower limit of Conditional Expression (1), the dispersions (Abbe number vd) of the positive lens and the negative lens approach each other within an appropriate range, and the dispersion characteristics (partial dispersion ratio θgf) of the positive lens and the negative lens can be brought closer to each other because of the selection of the glass material, so that the secondary spectral quantity Δ1 of the axial chromatic aberration can be suppressed which is generated in the first lens unit. If the Abbe number exceeds the upper limit of Conditional Expression (1), the refractive power of each of the single lenses in the first lens unit becomes large, and it becomes difficult to correct various aberrations at the telephoto end, particularly, a spherical aberration and comatic aberration. In addition, it becomes difficult to produce a glass material having the low dispersion and high refractive index.

Conditional Expression (1) can be set further as follows.

$$40 < vn < 44 \ ... \ (1a)$$

Conditional Expression (2) specifies a relational expression between the Abbe number and the refractive index of the negative lens which constitutes the first lens unit.

If the value of the relational expression does not satisfy the lower limit of Conditional Expression (2), the glass of the negative lens becomes not to have the high refractive index and low dispersion, which accordingly makes it difficult to adequately correct the chromatic aberration at the telephoto end. If the value of the relational expression exceeds the upper limit of Conditional Expression (2), it becomes difficult to produce a glass material having the low dispersion and high refractive index.

Conditional Expression (2) can be set further as follows.

$$2.25 < Nn + 0.01 \times vn < 2.30 \ ... \ (2a)$$

Conditional Expression (3) specifies the condition of the refractive index of the negative lens which constitutes the first lens unit. If the refractive index does not satisfy the lower limit of Conditional Expression (3), the curvature of the negative lens increases, which accordingly makes it difficult to correct various aberrations at the telephoto end, particularly, the spherical aberration and the comatic aberration. If the refractive index exceeds the upper limit of Conditional Expression (3), it becomes difficult to produce a glass material having the low dispersion and high refractive index.

Conditional Expression (3) can be set further as follows.

$$1.80 < Nn < 1.89 \ ... \ (3a)$$

The Conditional Expression (4) specifies a ratio of the refractive power of the first lens unit to the refractive power of the negative lens which constitutes the first lens unit.

If the ratio does not satisfy the upper limit and the lower limit of the Conditional Expression (4), it becomes difficult to appropriately correct the occurrence of chromatic aberration of the negative lens which constitutes the first lens unit, by the positive lens, and it becomes difficult to correct the axial chromatic aberration and a chromatic aberration of magnification at the telephoto end.

Conditional Expression (4) can be set further as follows.

$$1.51 < |fn \ / \ f1| < 1.9 \ ... \ (4a)$$

In a further embodiment of the present invention, the average value vpa of the dispersions of the positive lenses in the first lens unit is specified by Conditional Expression (5).

$$77 < vpa < 100 \ ... \ (5)$$

If the average value vpa is below the lower limit value of Conditional Expression (5), the refractive power of each of the single lenses in the first lens unit becomes large, and it becomes difficult to correct various aberrations at the telephoto end, particularly, the spherical aberration and the comatic aberration.

If the average value vpa is over the upper limit value of Conditional Expression (5), it becomes difficult to produce a low-dispersion glass material. Conditional Expression (5) can be set further as follows.

$$82 < vpa < 96 \ ... \ (5a)$$

In a further embodiment of the present invention, a condition is specified for obtaining a zoom lens that has the high magnification, the wide angle of view, and the high optical performance over the whole zoom range, by specifying the configurations and the refractive powers of the lens units after the third lens unit. By adopting the configuration of Conditional Expression (5), the high magnification can be achieved while the total lens length is kept.

In a further embodiment of the present invention, the condition of the dispersion characteristics of the lens material in the second lens unit is specified by Conditional Expression (6). When the Abbe number and the partial dispersion ratio of the positive lens having the smallest Abbe number out of the positive lenses which constitute the second lens unit are represented by vp2 and θp2, respectively, and the Abbe number and the partial dispersion ratio of the negative lens having the smallest Abbe number out of the negative lenses which constitute the second lens unit are represented by vn2 and θn2, respectively, the positive lens and the negative lens satisfy the following conditional expression of

$$3.1 \times 10^{-3} < (θp2 - θn2) \ / \ (vn2 - vp2) < 6.0 \times 10^{-3} \ ... \ (6).$$

If the value of (θp2-θn2)/(vn2-vp2) does not satisfy the lower limit of Conditional Expression (6), the effect for correcting the occurrence of chromatic aberration of the first lens unit by the second lens unit becomes insufficient, and it becomes difficult to adequately correct a fluctuation of the axial chromatic aberration due to zooming. If the value of (θp2-θn2)/(vn2-vp2) is over the upper limit of Conditional Expression (6), it becomes difficult to adequately correct the fluctuation of the chromatic aberration of magnification due to the chromatic aberration which is generated by the second lens unit. In addition, because the selection of the glass material is limited, the dispersions of the positive lens and the negative lens in the second lens unit become close to each other, and the refractive power of each of the single lenses increases. As a result, it becomes difficult to adequately correct various aberrations at the telephoto end.

Conditional Expression (6) can be set further as follows.

$$3.4 \times 10^{-3} < (\theta p2 - \theta n2) / (vn2 - vp2) < 5.6 \times 10^{-3} \ldots$$

$$(6a)$$

In a further embodiment of the present invention, a ratio between the focal lengths f1 and f2 of the first lens unit and the second lens unit is specified by Conditional Expression (7).

$$3 < |f1 / f2| < 9 \ldots (7)$$

If the ratio is over the upper limit of Conditional Expression (7), the refractive power of the second lens unit becomes too strong relatively to the refractive power of the first lens unit, the fluctuation of various aberrations increases, which makes it difficult to correct the various aberrations.

If the ratio is below the lower limit of Conditional Expression (7), the refractive power of the second lens unit becomes too weak relatively to the refractive power of the first lens unit, the amount of movement of the second lens unit for zooming increases, which makes it difficult to achieve both of the miniaturization and the high magnification.

Next, the features of each numerical embodiment will be described below.

[Embodiment 1]

The zoom lens of the Numerical Embodiment 1 includes in order from an object side to an image side: a positive first lens unit that does not move for zooming and moves for focusing; a negative second lens unit that moves to an image side for zooming from the wide angle end to the telephoto end; a negative third lens unit that moves for zooming; and a positive relay lens unit for imaging, which does not move for zooming.

The first lens unit includes in order from the object side to the image side, five lenses of negative, positive, positive, positive and positive lenses.

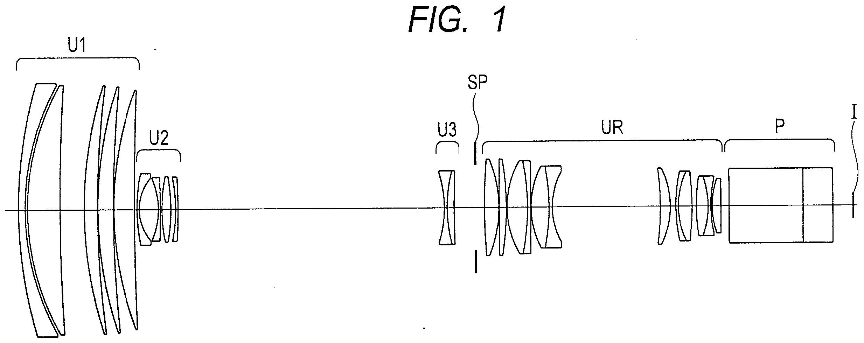

FIG. 1 is a sectional view of lenses at the time when the zoom lens in Numerical Embodiment 1 focuses on an infinite object at the wide angle end. In the sectional view of the lenses, the left side is a subject side (object side), and the right side is an image side.

The first lens unit U1 has a positive refractive power and does not move for zooming. A part of the first lens unit moves from the image side to the object side for focus adjustment from the infinite distance to a finite distance. The second lens unit (variator lens unit) U2 has a negative refractive power for zooming and moves to the image side for zooming from the wide angle end (short focal length end) to the telephoto end (long focal length end). The third lens unit U3 has a negative refractive power and moves for zooming. An aperture stop SP is illustrated. A relay lens unit UR does not move for zooming. The reference character P corresponds to an optical filter or a color separation optical system, and is illustrated as a glass block in the figure. An image plane I corresponds to an imaging plane of the image pickup element (photoelectric conversion element).

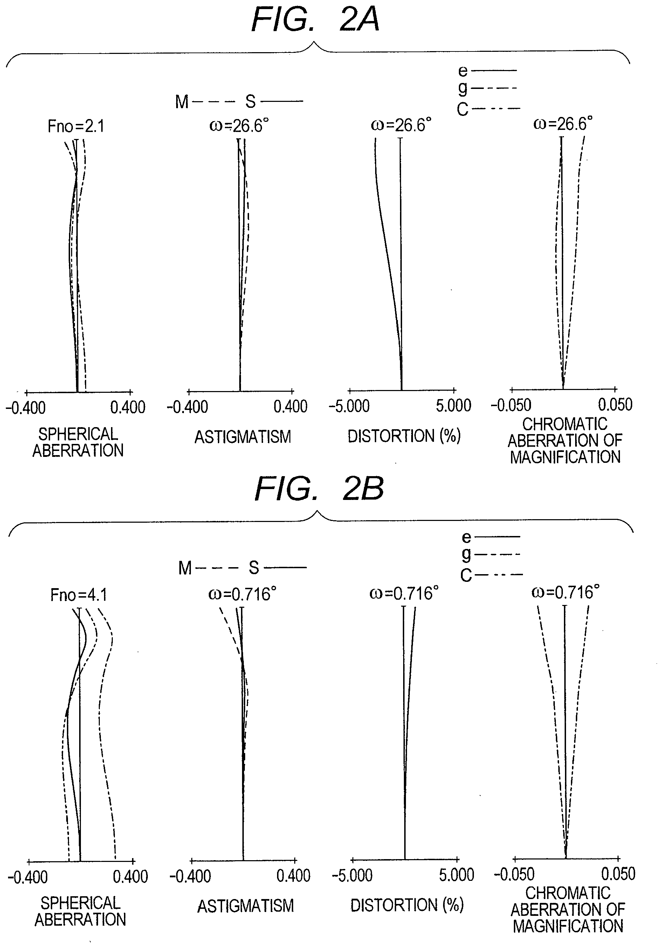

FIGS. 2A and 2B illustrate aberration diagrams at the time when the zoom lens in Numerical Embodiment 1 focuses on the infinite object at the wide angle end and the telephoto end, respectively. In each of the aberration diagrams, the spherical aberration is shown by e-line, g-line, and C-line. The astigmatism is shown by a meridional image plane (M) for the e-line and a sagittal image plane (S) for the e-line. The distortion is shown for the e-line, and the chromatic aberration of magnification is shown for the g-line and the C-line. In addition, the spherical aberration is drawn with a scale of 0.4 mm, the astigmatism with a scale of 0.4 mm, the distortion with a scale of 5%, and the chromatic aberration of magnification with a scale of 0.05 mm. The F number Fno is illustrated, and the half angle of view ω is illustrated. Incidentally, the wide angle end and the telephoto end mean the zoom positions at the time when the zoom lens is positioned in both ends of the range in which the second lens unit U2 (variator lens unit) for zooming can move on the optical axis by the mechanism, respectively. The above description is similar in the following Numerical Embodiments 2 to 7.

Table 1 shows values corresponding to each of the conditional expressions in Numerical Embodiment 1. Numerical Embodiment 1 satisfies Conditional Expressions (1) to (7). Thereby, the zoom lens achieves a small-sized and lightweight imaging optical system having the high zoom ratio, the wide angle of view, and the high optical performance at the telephoto end.

[Embodiment 2]

A zoom lens of the Numerical Embodiment 2 includes in order from the object side to the image side: a positive first lens unit that does not move for zooming and moves for focusing; a negative second lens unit that moves to the image side for zooming from the wide angle end to the telephoto end; a negative third lens unit that moves for zooming; a negative fourth lens unit that moves for zooming; and a positive relay lens unit that does not move for zooming.

The first lens unit includes in order from the object side to the image side, five lenses of negative, positive, positive, positive and positive lenses.

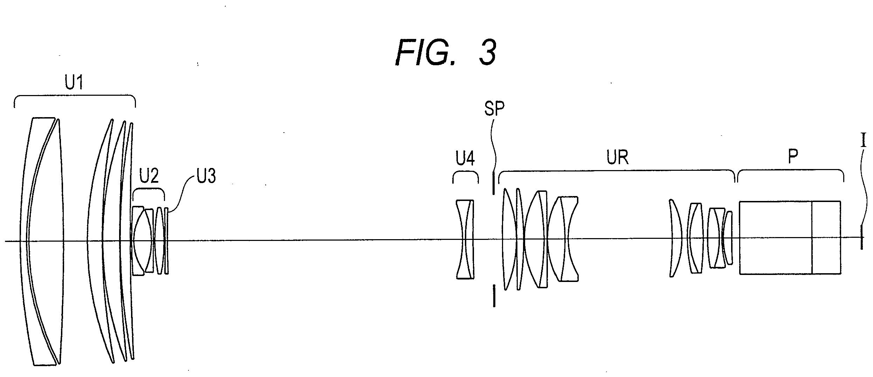

FIG. 3 is a sectional view of lenses at the time when the zoom lens in Numerical Embodiment 2 focuses on an infinite object at a wide angle end. The first lens unit U1 has a positive refractive power and does not move for zooming. A part of the first lens unit moves from the image side to the object side for the focus adjustment from the infinite distance to a finite distance. A second lens unit (variator lens unit) U2 has a negative refractive power for zooming and moves to the image side for zooming from the wide angle end to the telephoto end. A third lens unit U3 has a negative refractive power and moves for zooming. A fourth lens unit U4 has a negative refractive power and moves for zooming. The aperture stop SP is illustrated. The relay lens unit UR has a positive refractive power and does not move for zooming. The reference character P corresponds to an optical filter or a color separation optical system, and is illustrated as a glass block in the figure. An image plane I corresponds to the imaging plane of the image pickup element (photoelectric conversion element).

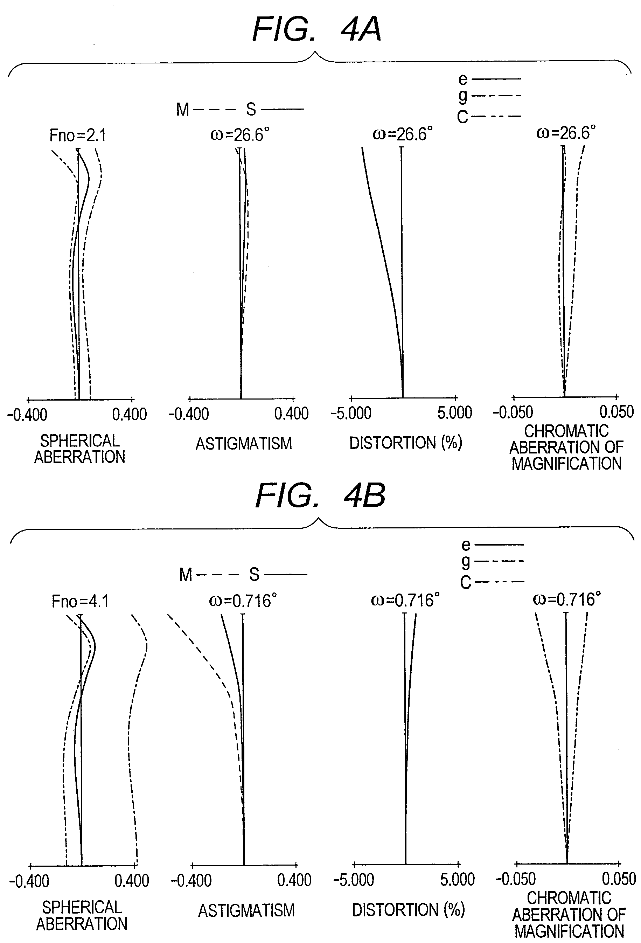

FIGS. 4A and 4B illustrate aberration diagrams when the zoom lens in Numerical Embodiment 2 focuses on the infinite object at the wide angle end and the telephoto end, respectively.

Table 1 shows values corresponding to each of the conditional expressions in Numerical Embodiment 2. Numerical Embodiment 2 satisfies Conditional Expressions (1) to (7). Thereby, the zoom lens achieves a small-sized and lightweight imaging optical system having the high zoom ratio, the wide angle of view and the high optical performance at the telephoto end.

[Embodiment 3]

The zoom lens of the Numerical Embodiment 3 includes in order from an object side to an image side: a positive first lens unit that does not move for zooming and moves for focusing;' a negative second lens unit that moves to the image side for zooming from the wide angle end to the telephoto end; a negative third lens unit that moves for zooming; a negative fourth lens unit that moves for zooming; a positive fifth lens unit that moves for zooming; and a positive relay lens unit that does not move for zooming.

The first lens unit includes in order from the object side to the image side, six lenses of positive, negative, positive, positive, positive and positive lenses.

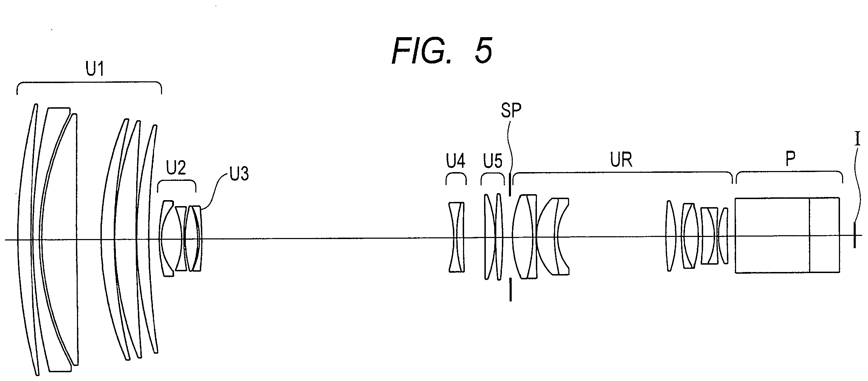

FIG. 5 is a sectional view of lenses at the time when the zoom lens in Numerical Embodiment 3 focuses on an infinite object at the wide angle end. The first lens unit U1 has a positive refractive power and does not move for zooming. A part of the first lens unit moves from the image side to the object side for focusing from the infinite distance to a finite distance. A second lens unit (variator lens unit) U2 has a negative refractive power for zooming and moves to the image side for zooming from the wide angle end to the telephoto end. The third lens unit U3 has a negative refractive power and moves for zooming. A fourth lens unit U4 has a negative refractive power and moves for zooming. A fifth lens unit U5 has a positive refractive power and moves for zooming. An aperture stop SP is illustrated. The relay lens unit UR has a positive refractive power and does not move for zooming. The reference character P corresponds to an optical filter or a color separation optical system, and represents a glass block in the figure. An image plane I corresponds to an imaging plane of the image pickup element (photoelectric conversion element).

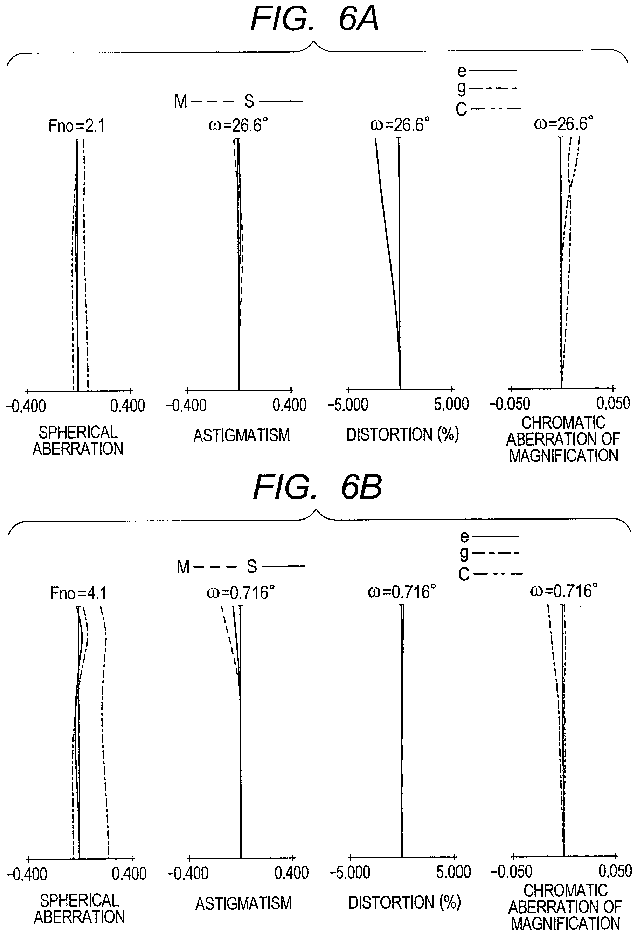

FIGS. 6A and 6B illustrate aberration diagrams when the zoom lens in Numerical Embodiment 3 focuses on the infinite object at the wide angle end and the telephoto end, respectively.

Table 1 shows values corresponding to each of the conditional expressions in Numerical Embodiment 3. Numerical Embodiment 3 satisfies Conditional Expressions (1) to (7). Thereby, the zoom lens achieves a small-sized and lightweight imaging optical system having the high zoom ratio, the wide angle of view, and the high optical performance at the telephoto end.

[Embodiment 4]

The zoom lens of the Numerical Embodiment 4 of the present invention includes in order from an object side to an image side: a positive first lens unit that does not move for zooming and moves for focusing; a negative second lens unit that moves to the image side for zooming from the wide angle end to the telephoto end; a negative third lens unit that moves for zooming; a negative fourth lens unit that moves for zooming; a positive fifth lens unit that moves for zooming; and a positive relay lens unit that does not move for zooming.

The first lens unit includes in order from the object side to the image side, six lenses of positive, negative, positive, positive, positive and positive lenses.

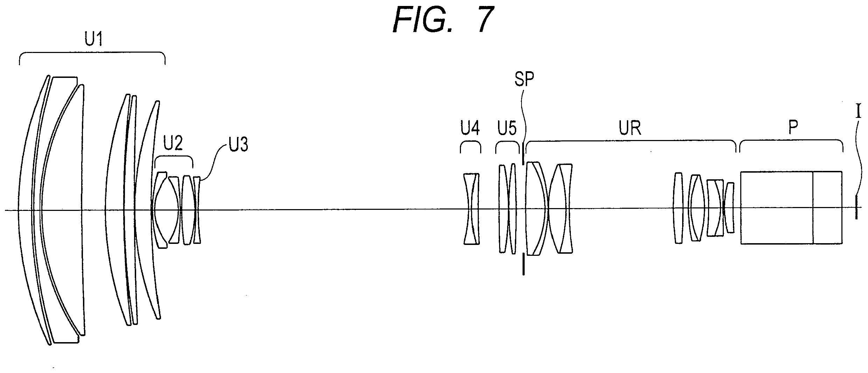

FIG. 7 is a sectional view of lenses at the time when the zoom lens in Numerical Embodiment 4 of the present invention focuses on an infinite object at the wide angle end. The first lens unit U1 has a positive refractive power and does not move for zooming. A part of the first lens unit moves from the image side to the object side for focusing from the infinite distance to a finite distance. A second lens unit (variator lens unit) U2 has a negative refractive power for zooming and moves to the image side for zooming from the wide angle end to the telephoto end. The third lens unit U3 has a negative refractive power and moves for zooming. A fourth lens unit U4 has a negative refractive power and moves for zooming. A fifth lens unit U5 has a positive refractive power and moves for zooming. An aperture stop SP is illustrated. The relay lens unit UR has a positive refractive power and does not move for zooming. The reference character P corresponds to an optical filter or a color separation optical system, and represents a glass block in the figure. An image plane I corresponds to an imaging plane of the image pickup element (photoelectric conversion element).

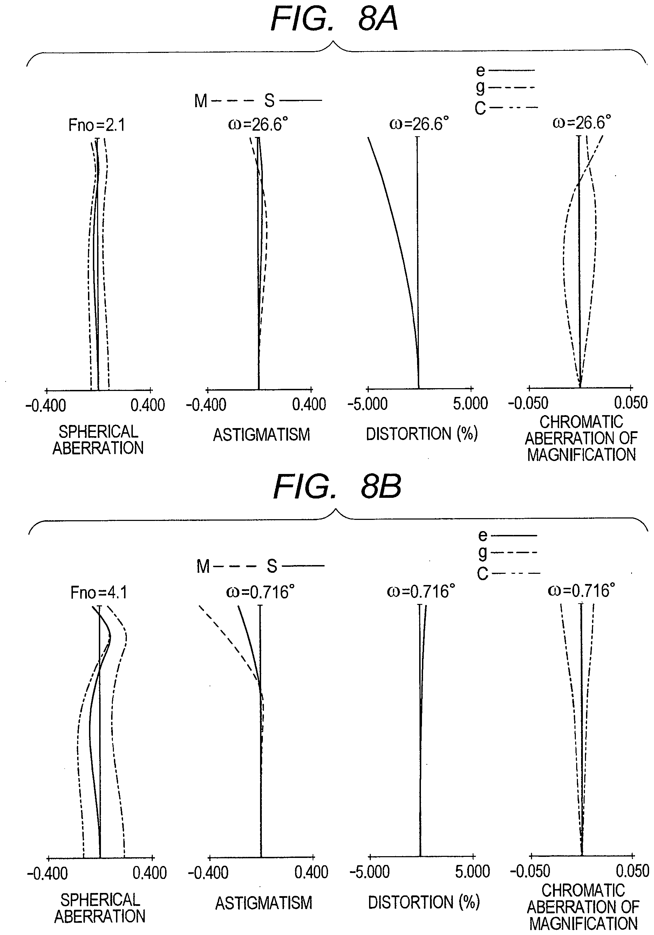

FIGS. 8A and 8B illustrate aberration diagrams when the zoom lens in Numerical Embodiment 4 focuses on the infinite object at the wide angle end and the telephoto end, respectively.

Table 1 shows values corresponding to each of the conditional expressions in Numerical Embodiment 4. Numerical Embodiment 4 satisfies Conditional Expressions (1) to (7). Thereby, the zoom lens of the present invention achieves a small-sized and lightweight imaging optical system having the high zoom ratio, the wide angle of view, and the high optical performance at the telephoto end.

[Embodiment 5]

A zoom lens of the Numerical Embodiment 5 of the present invention includes in order from the object side to the image side: a positive first lens unit that does not move for zooming and moves for focusing; a negative second lens unit that moves to the image side for zooming from the wide angle end to the telephoto end; a negative third lens unit that moves for zooming; a positive fourth lens unit that moves for zooming; and a positive relay lens unit that does not move for zooming.

The first lens unit includes in order from the object side to the image side, six lenses of positive, negative, positive, positive, positive and positive lenses.

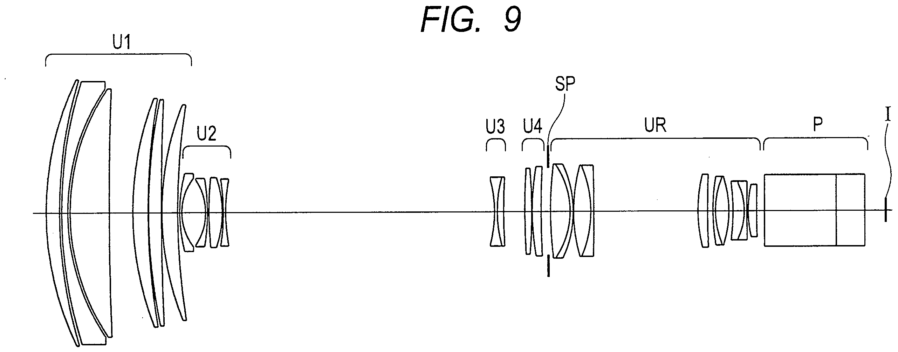

FIG. 9 is a sectional view of lenses at the time when the zoom lens in Numerical Embodiment 5 of the present invention focuses on an infinite object at the wide angle end. The first lens unit U1 has a positive refractive power and does not move for zooming. A part of the first lens unit moves from the image side to the object side for focusing from the infinite distance to a finite distance. A second lens unit (variator lens unit) U2 has a negative refractive power for zooming and moves to the image side for zooming from the wide angle end to the telephoto end. The third lens unit U3 has a negative refractive power and moves for zooming. A fourth lens unit U4 has a positive refractive power and moves for zooming. An aperture stop SP is illustrated. The relay lens unit UR has a positive refractive power and does not move for zooming. The reference character P corresponds to an optical filter or a color separation optical system, and represents a glass block in the figure. An image plane I corresponds to an imaging plane of the image pickup element (photoelectric conversion element).

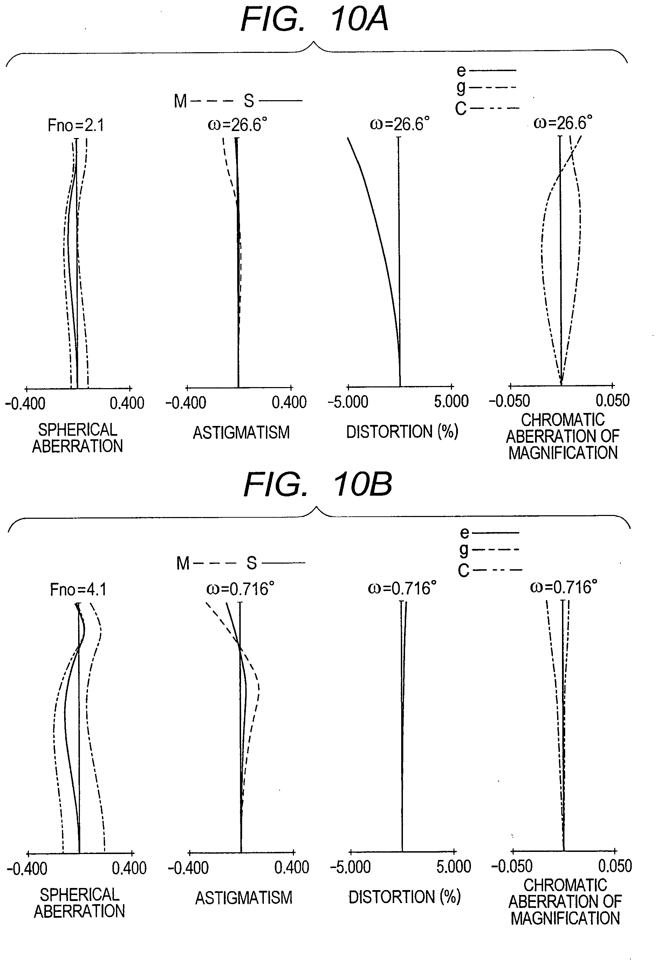

FIGS. 10A and 10B illustrate aberration diagrams when the zoom lens in Numerical Embodiment 5 focuses on the infinite object at the wide angle end and the telephoto end, respectively.

Table 1 shows values corresponding to each of the conditional expressions in Numerical Embodiment 5. Numerical Embodiment 5 satisfies Conditional Expressions (1) to (7). Thereby, the zoom lens of the present invention achieves a small-sized and lightweight imaging optical system having the high zoom ratio, the wide angle of view and the high optical performance at the telephoto end.

[Embodiment 6]

A zoom lens of the Numerical Embodiment 6 includes in order from the object side to the image side: a positive first lens unit that does not move for zooming and moves for focusing; a negative second lens unit that moves to the image side for zooming from the wide angle end to the telephoto end; a positive third lens unit that moves for zooming; a positive fourth lens unit that moves for zooming; and a positive relay lens unit that does not move for zooming.

The first lens unit includes in order from the object side to the image side, five lenses of negative, positive, positive, positive and positive lenses.

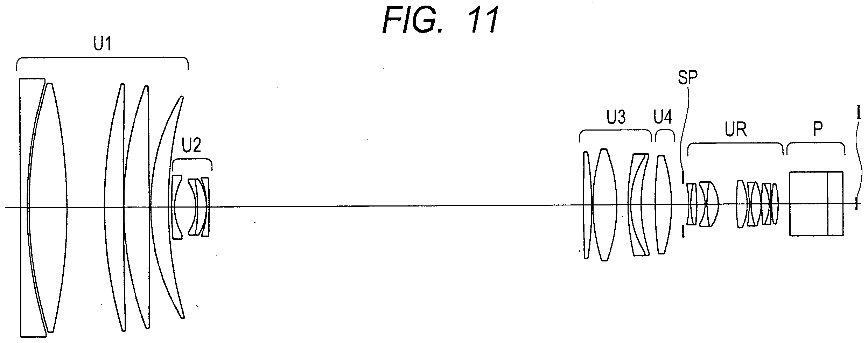

FIG. 11 is a sectional view of lenses at the time when the zoom lens in Numerical Embodiment 6 focuses on an infinite object at the wide angle end. The first lens unit U1 has a positive refractive power and does not move for zooming. A part of the first lens unit moves from the image side to the object side for focusing from the infinite distance to a finite distance. A second lens unit (variator lens unit) U2 has a negative refractive power for zooming and moves to the image side for zooming from the wide angle end to the telephoto end. The third lens unit U3 has a positive refractive power and moves for zooming. A fourth lens unit U4 has a positive refractive power and moves for zooming. An aperture stop SP is illustrated. The relay lens unit UR has a positive refractive power and does not move for zooming. The reference character P corresponds to an optical filter or a color separation optical system, and represents a glass block in the figure. An image plane I corresponds to an imaging plane of the image pickup element (photoelectric conversion element).

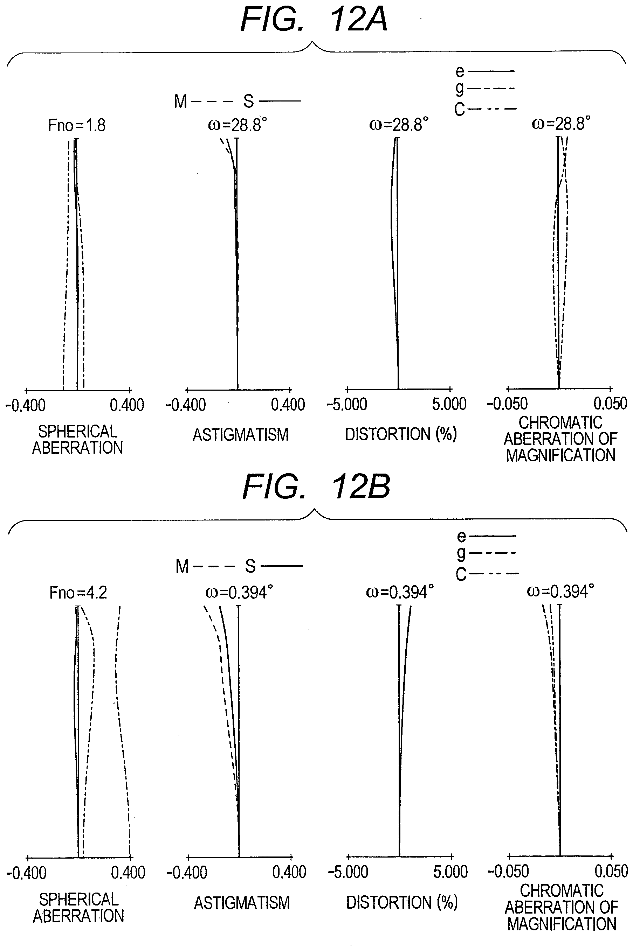

FIGS. 12A and 12B illustrate aberration diagrams when the zoom lens in Numerical Embodiment 6 focuses on the infinite object at the wide angle end and the telephoto end, respectively.

Table 1 shows values corresponding to each of the conditional expressions in Numerical Embodiment 6. The Numerical Embodiment 6 satisfies Conditional Expressions (1) to (7). Thereby, the zoom lens achieves a small-sized and lightweight imaging optical system having the high zoom ratio, the wide angle of view and the high optical performance at the telephoto end.

[Embodiment 7]

The zoom lens of the Numerical Embodiment 7 of the present invention includes in order from an object side to an image side: a positive first lens unit which does not move for zooming and moves for focusing; a negative second lens unit which moves to the image side for zooming from the wide angle end to the telephoto end; a negative third lens unit which moves for zooming; a positive fourth lens unit which moves for zooming; and a positive relay lens unit that does not move for zooming.

The first lens unit includes in order from the object side to the image side, five lenses of negative, positive, positive, positive and positive lenses.

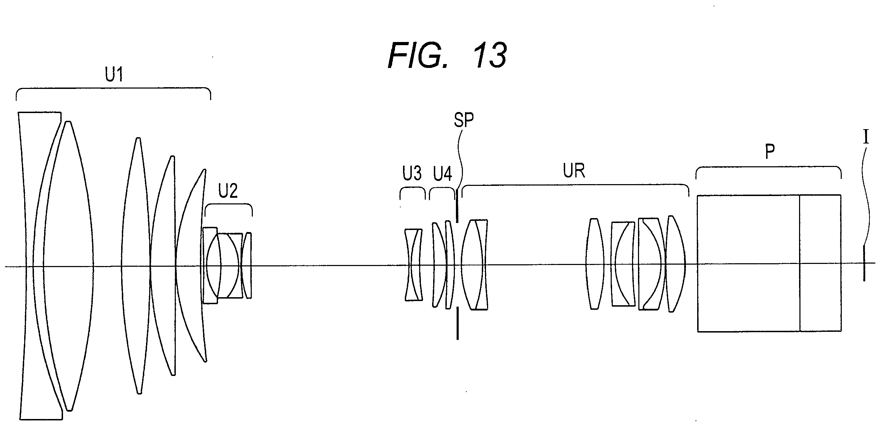

FIG. 13 is a sectional view of lenses at the time when the zoom lens in Numerical Embodiment 7 of the present invention focuses on an infinite object at the wide angle end. The first lens unit U1 has a positive refractive power and does not move for zooming. A part of the first lens unit moves from the image side to the object side for focusing from the infinite distance to a finite distance. A second lens unit (variator lens unit) U2 has a negative refractive power for zooming and moves to the image side for zooming from the wide angle end to the telephoto end. The third lens unit U3 has a negative refractive power and moves for zooming. A fourth lens unit U4 has a positive refractive power and moves for zooming. An aperture stop SP is illustrated. The relay lens unit UR has a positive refractive power and does not move for zooming. The reference character P corresponds to an optical filter or a color separation optical system, and represents a glass block in the figure. An image plane I corresponds to an imaging plane of the image pickup element (photoelectric conversion element).

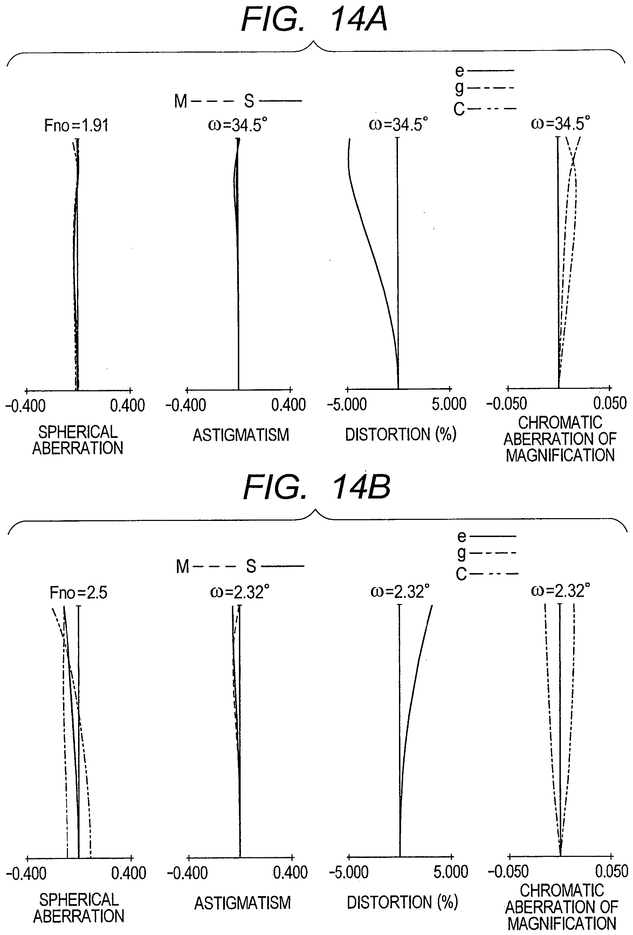

FIGS. 14A and 14B illustrate aberration diagrams when the zoom lens in Numerical Embodiment 7 focuses on the infinite object at the wide angle end and the telephoto end, respectively.

Table 1 shows values corresponding to each of conditional expressions in Numerical Embodiment 7. Numerical Embodiment 7 satisfies Conditional Expressions (1) to (7). Thereby, the zoom lens of the present invention achieves a small-sized and lightweight imaging optical system having the high zoom ratio, the wide angle of view and the high optical performance at the telephoto end.

Numeric data of each of the following Numerical Embodiments 1 to 7 is shown. In each of the numerical data, i represents a surface number counted from the object side, ri represents a radius of curvature of the i-th surface from the object side, di represents a distance between the i-th surface and the (i+1)-th surface, ndi and vdi represent a refractive index to d-line (587.6 nm) and the Abbe number of the optical member between the i-th surface and the (i+1)-th surface.

Incidentally, when the refractive indices with respect to the g-line, the F-line, the d-line, and the C-line of the Fraunhofer line are represented by Ng, NF, Nd and NC, definitions of the Abbe number vd and the partial dispersion ratio θgf are represented by the following expressions which are generally used:

$$vd = (Nd - 1) / (NF - NC);$$

and

$$\theta gf = (Ng - NF) / (NF - NC).$$

When an optical axis direction is determined to be an X-axis, a direction perpendicular to the optical axis is determined to be an H-axis, a traveling direction of light is determined to be positive, R represents a paraxial radius of curvature, k represents a conic constant, and A3, A4, A5, A6, A7, A8, A9, A10, A11, A12, A13, A14, A15 and A16 each represent an aspherical coefficient, an aspherical surface shape is expressed by the following expression.

$$X = \frac{H^2 / R}{1 + \sqrt{1 - (1 + k)(H / R)^2}}$$
$$+ A4 H^4 + A6 H^6 + A8 H^8 + A10 H^{10} + A12 H^{12} + A14 H^{14} + A16 H^{16}$$
$$+ A3 H^3 + A5 H^5 + A7 H^7 + A9 H^9 + A11 H^{11} + A13 H^{13} + A15 H^{15}$$

In addition, in the numerical data, "e-Z" means "$\times 10^{-z}$". A mark * attached to the side of the surface number indicates that the optical surface is aspherical.

<Numerical Embodiment 1>

Unit mm

Surface data

| Surface number i | ri | di | ndi | vdi | θgFi | Effective diameter | Focal length |
|---|---|---|---|---|---|---|---|
| 1 | 183.38205 | 3.00000 | 1.851500 | 40.78 | 0.5695 | 107.317 | -299.999 |
| 2 | 106.20042 | 1.07300 | | | | 104.856 | |
| 3 | 105.24783 | 15.02434 | 1.433870 | 95.10 | 0.5373 | 105.542 | 277.864 |
| 4 | 779.51784 | 11.15000 | | | | 105.422 | |
| 5 | 165.31760 | 6.12449 | 1.433870 | 95.10 | 0.5373 | 105.304 | 669.343 |
| 6 | 378.23664 | 0.20000 | | | | 105.061 | |
| 7 | 160.28421 | 7.18852 | 1.433870 | 95.10 | 0.5373 | 104.154 | 537.649 |
| 8 | 502.55531 | 0.20000 | | | | 103.770 | |
| 9 | 138.33041 | 9.68950 | 1.433870 | 95.10 | 0.5373 | 101.093 | 358.855 |
| 10 | 1190.11331 | (Variable) | | | | 100.504 | |
| 11 | 78.49053 | 1.00000 | 2.003300 | 28.27 | 0.5980 | 29.896 | -27.011 |
| 12 | 20.13981 | 8.91847 | | | | 25.967 | |
| 13 | -31.92813 | 0.90000 | 1.816000 | 46.62 | 0.5568 | 25.580 | -42.349 |
| 14 | -400.35824 | 0.70000 | | | | 26.428 | |
| 15 | 65.72626 | 4.13898 | 1.922860 | 18.90 | 0.6495 | 27.396 | 38.945 |
| 16 | -79.02840 | 2.23382 | | | | 27.392 | |
| 17 | -66.32430 | 1.10000 | 1.816000 | 46.62 | 0.5568 | 26.678 | -110.486 |
| 18 | -249.25223 | (Variable) | | | | 26.682 | |
| 19 | -47.61650 | 1.30000 | 1.717004 | 47.92 | 0.5605 | 28.434 | -36.201 |
| 20 | 58.34616 | 3.27859 | 1.846490 | 23.90 | 0.6217 | 30.416 | 79.554 |
| 21 | 400.18520 | (Variable) | | | | 30.870 | |
| 22 | ∞ | 4.05388 | | | | 37.218 | |
| 23 | 226.67058 | 6.75742 | 1.607379 | 56.81 | 0.5483 | 40.360 | 70.385 |
| 24 | -52.36155 | 0.15000 | | | | 40.885 | |
| 25 | 3180.72058 | 3.29188 | 1.518229 | 58.90 | 0.5457 | 40.838 | 231.404 |
| 26 | -125.09849 | 0.35000 | | | | 40.820 | |
| 27 | 39.06865 | 9.43204 | 1.487490 | 70.23 | 0.5300 | 39.408 | 58.436 |
| 28 | -98.06367 | 1.50000 | 1.834000 | 37.17 | 0.5774 | 38.312 | -121.818 |
| 29 | -2415.03003 | 0.15000 | | | | 37.274 | |
| 30 | 36.73108 | 8.30910 | 1.487490 | 70.23 | 0.5300 | 34.520 | 53.864 |
| 31 | -86.27365 | 1.50000 | 1.882997 | 40.76 | 0.5667 | 32.687 | -25.097 |
| 32 | 30.30129 | 50.00000 | | | | 29.408 | |
| 33 | -120.62916 | 4.64093 | 1.517417 | 52.43 | 0.5564 | 31.772 | 94.501 |

(continued)

| Surface number i | ri | di | ndi | vdi | θgFi | Effective diameter | Focal length |
|---|---|---|---|---|---|---|---|
| 34 | -35.36457 | 2.54355 | | | | 32.006 | |
| 35 | 63.07563 | 1.20000 | 1.785896 | 44.20 | 0.5631 | 29.131 | -82.516 |
| 36 | 31.79036 | 6.49533 | 1.517417 | 52.43 | 0.5564 | 28.010 | 48.172 |
| 37 | -109.65039 | 2.01000 | | | | 27.264 | |
| 38 | 76.16107 | 5.44373 | 1.517417 | 52.43 | 0.5564 | 24.801 | 48.054 |
| 39 | -36.25647 | 1.20000 | 1.834807 | 42.71 | 0.5642 | 23.497 | -24.462 |
| 40 | 48.07162 | 0.66799 | | | | 22.402 | |
| 41 | 33.72522 | 4.04093 | 1.487490 | 70.23 | 0.5300 | 22.524 | 67.643 |
| 42 | -1680.64571 | 3.80000 | | | | 22.178 | |
| 43 | ∞ | 34.37500 | 1.608590 | 46.44 | 0.5664 | 31.250 | |
| 44 | ∞ | 13.75000 | 1.516800 | 64.17 | 0.5347 | 31.250 | |
| 45 | ∞ | 0.00000 | | | | 31.250 | |

Various data

Zoom ratio 40.00

| | Wide angle | Middle | Telephoto |
|---|---|---|---|
| Focal length | 11.00 | 69.58 | 440.00 |
| F number | 2.10 | 2.10 | 4.10 |
| Half angle of view | 26.57 | 4.52 | 0.72 |
| image height | 5.50 | 5.50 | 5.50 |
| Total lens length | 387.49 | 387.49 | 387.49 |
| BF | 9.54 | 9.54 | 9.54 |
| d10 | 1.22 | 91.07 | 120.94 |
| d18 | 123.69 | 21.43 | 12.31 |
| d21 | 10.16 | 22.57 | 1.82 |
| d45 | 9.54 | 9.54 | 9.54 |
| Entrance pupil position | 74.99 | 549.83 | 2183.07 |
| Exit pupil position | 756.96 | 756.96 | 756.96 |
| Front principal point position | 86.15 | 625.88 | 2882.10 |
| Rear principal point position | -1.46 | -60.04 | -430.46 |

Zoom lens unit data

| Unit | Leading surface | Focal length | Lens configuration length | Front principal point position | Rear principal point position |
|---|---|---|---|---|---|
| 1 | 1 | 161.84 | 53.65 | 26.24 | -15.14 |
| 2 | 11 | -22.41 | 18.99 | 1.63 | -13.63 |
| 3 | 19 | -66.60 | 4.58 | 0.24 | -2.27 |
| 4 | 22 | 87.71 | 165.66 | 96.66 | -190.05 |

Single lens data

| Lens | Leading surface | Focal length |
|---|---|---|
| 1 | 1 | -300.00 |
| 2 | 3 | 277.86 |
| 3 | 5 | 669.34 |
| 4 | 7 | 537.65 |
| 5 | 9 | 358.86 |
| 6 | 11 | -27.01 |
| 7 | 13 | -42.35 |
| 8 | 15 | 38.94 |
| 9 | 17 | -110.49 |
| 10 | 19 | -36.20 |
| 11 | 20 | 79.55 |
| 12 | 23 | 70.38 |
| 13 | 25 | 231.40 |
| 14 | 27 | 58.44 |
| 15 | 28 | -121.82 |
| 16 | 30 | 53.86 |
| 17 | 31 | -25.10 |
| 18 | 33 | 94.50 |
| 19 | 35 | -82.52 |
| 20 | 36 | 48.17 |
| 21 | 38 | 48.05 |
| 22 | 39 | -24.46 |
| 23 | 41 | 67.64 |
| 24 | 43 | |
| 25 | 44 | |

<Numerical Embodiment 2>

Unit mm

Surface data

| Surface number i | ri | di | ndi | vdi | OgFi | Effective diameter | Focal length |
|---|---|---|---|---|---|---|---|
| 1 | 244.49912 | 3.00000 | 1.851500 | 40.78 | 0.5695 | 107.317 | -249.990 |
| 2 | 113.50168 | 1.07300 | | | | 105.259 | |
| 3 | 113.09472 | 16.49967 | 1.438750 | 94.93 | 0.5340 | 106.008 | 225.766 |
| 4 | -778.08590 | 11.15000 | | | | 106.048 | |
| 5 | 131.53389 | 7.09222 | 1.496999 | 81.54 | 0.5375 | 105.522 | 499.736 |
| 6 | 273.70166 | 0.20000 | | | | 105.178 | |
| 7 | 141.78804 | 8.13059 | 1.496999 | 81.54 | 0.5375 | 103.917 | 405.638 |
| 8 | 465.55777 | 0.20000 | | | | 103.427 | |
| 9 | 263.20879 | 4.85331 | 1.496999 | 81.54 | 0.5375 | 102.191 | 718.636 |
| 10 | 986.38007 | (Variable) | | | | 101.629 | |
| 11 | 228.28308 | 1.00000 | 2.003300 | 28.27 | 0.5980 | 29.404 | -24.189 |
| 12 | 22.05348 | 8.46763 | | | | 25.929 | |
| 13 | -31.93035 | 0.90000 | 1.816000 | 46.62 | 0.5568 | 25.788 | -40.325 |
| 14 | -936.02346 | 0.70000 | | | | 26.986 | |
| 15 | 73.32401 | 4.25046 | 1.922860 | 18.90 | 0.6495 | 28.321 | 40.399 |
| 16 | -75.60692 | (Variable) | | | | 28.480 | |

(continued)

| Surface number i | ri | di | ndi | vdi | OgFi | Effective diameter | Focal length |
|---|---|---|---|---|---|---|---|
| 17 | -1238.40219 | 1.10000 | 1.816000 | 46.62 | 0.5568 | 28.202 | -330.976 |
| 18 | 347.80223 | (Variable) | | | | 28.092 | |
| 19 | -45.71318 | 1.30000 | 1.717004 | 47.92 | 0.5605 | 30.776 | -35.904 |
| 20 | 60.31471 | 3.66203 | 1.846490 | 23.90 | 0.6217 | 33.255 | 78.338 |
| 21 | 590.34562 | (Variable) | | | | 33.752 | |
| 22 | ∞ | 4.05388 | | | | 40.157 | |
| 23 | 226.67058 | 6.75742 | 1.607379 | 56.81 | 0.5483 | 43.554 | 70.385 |
| 24 | -52.36155 | 0.15000 | | | | 43.841 | |
| 25 | 3180.72058 | 3.29188 | 1.518229 | 58.90 | 0.5457 | 43.661 | 231.404 |
| 26 | -125.09849 | 0.35000 | | | | 43.624 | |
| 27 | 39.06865 | 9.43204 | 1.487490 | 70.23 | 0.5300 | 41.707 | 58.436 |
| 28 | -98.06367 | 1.50000 | 1.834000 | 37.17 | 0.5774 | 41.031 | -121.818 |
| 29 | -2415.03003 | 0.15000 | | | | 39.789 | |
| 30 | 36.73108 | 8.30910 | 1.487490 | 70.23 | 0.5300 | 36.369 | 53.864 |
| 31 | -86.27365 | 1.50000 | 1.882997 | 40.76 | 0.5667 | 34.971 | -25.097 |
| 32 | 30.30129 | 50.00000 | | | | 31.056 | |
| 33 | -120.62916 | 4.64093 | 1.517417 | 52.43 | 0.5564 | 32.985 | 94.501 |
| 34 | -35.36457 | 2.54355 | | | | 33.186 | |
| 35 | 63.07563 | 1.20000 | 1.785896 | 44.20 | 0.5631 | 29.880 | -82.516 |
| 36 | 31.79036 | 6.49533 | 1.517417 | 52.43 | 0.5564 | 28.660 | 48.172 |
| 37 | -109.65039 | 2.01000 | | | | 27.924 | |
| 38 | 76.16107 | 5.44373 | 1.517417 | 52.43 | 0.5564 | 25.225 | 48.054 |
| 39 | -36.25647 | 1.20000 | 1.834807 | 42.71 | 0.5642 | 23.900 | -24.462 |
| 40 | 48.07162 | 0.66799 | | | | 22.464 | |
| 41 | 33.72522 | 4.04093 | 1.487490 | 70.23 | 0.5300 | 22.346 | 75.719 |
| 42 | 362.22377 | 3.80000 | | | | 21.915 | |
| 43 | ∞ | 34.37500 | 1.608590 | 46.44 | 0.5664 | 31.250 | |
| 44 | ∞ | 13.75000 | 1.516800 | 64.17 | 0.5347 | 31.250 | |
| 45 | ∞ | 0.00000 | | | | 31.250 | |

Various data

Zoom ratio 40.00

| | Wide angle | Middle | Telephoto |
|---|---|---|---|
| Focal length | 11.00 | 69.55 | 440.00 |
| F number | 2.10 | 2.09 | 4.10 |
| Half angle of view | 26.57 | 4.52 | 0.72 |
| Image height | 5.50 | 5.50 | 5.50 |
| Total lens length | 401.74 | 401.74 | 401.74 |
| BF | 10.07 | 10.07 | 10.07 |
| d10 | 0.68 | 94.56 | 123.53 |
| d16 | 0.50 | 7.52 | 5.54 |
| d18 | 141.39 | 30.16 | 21.57 |
| d21 | 9.86 | 20.19 | 1.79 |
| d45 | 10.07 | 10.07 | 10.07 |
| Entrance pupil position | 69.84 | 579.13 | 2533.83 |
| Exit pupil position | -2683.52 | -2683.52 | -2683.52 |

(continued)

| | Wide angle | Middle | Telephoto |
|---|---|---|---|
| Front principal point position | 80.80 | 646.89 | 2901.96 |
| Rear principal point position | -0.93 | -59.48 | -429.93 |

Zoom lens unit data

| Unit | Leading surface | Focal length | Lens configuration length | Front principal point position | Rear principal point position |
|---|---|---|---|---|---|
| 1 | 1 | 161.84 | 52.20 | 26.30 | -12.92 |
| 2 | 11 | -26.93 | 15.32 | -1.30 | -15.13 |
| 3 | 17 | -330.98 | 1.10 | 0.47 | -0.13 |
| 4 | 19 | -66.60 | 4.96 | 0.15 | -2.57 |
| 5 | 22 | 78.88 | 165.66 | 76.48 | -174.36 |

Single lens data

| Lens | Leading surface | Focal length |
|---|---|---|
| 1 | 1 | -249.99 |
| 2 | 3 | 225.77 |
| 3 | 5 | 499.74 |
| 4 | 7 | 405.64 |
| 5 | 9 | 718.64 |
| 6 | 11 | -24.19 |
| 7 | 13 | -40.32 |
| 8 | 15 | 40.40 |
| 9 | 17 | -330.98 |
| 10 | 19 | -35.90 |
| 11 | 20 | 78.34 |
| 12 | 23 | 70.38 |
| 13 | 25 | 231.40 |
| 14 | 27 | 58.44 |
| 15 | 28 | -121.82 |
| 16 | 30 | 53.86 |
| 17 | 31 | -25.10 |
| 18 | 33 | 94.50 |
| 19 | 35 | -82.52 |
| 20 | 36 | 48.17 |
| 21 | 38 | 48.05 |
| 22 | 39 | -24.46 |
| 23 | 41 | 75.72 |
| 24 | 43 | |
| 25 | 44 | |

<Numerical Embodiment 3>

Unit mm

Surface data

| Surface number i | ri | di | ndi | vdi | θgFi | Effective diameter | Focal length |
|---|---|---|---|---|---|---|---|
| 1 | 210.06296 | 6.07687 | 1.433870 | 95.10 | 0.5373 | 114.266 | 839.438 |
| 2 | 490.30405 | 1.00000 | | | | 113.593 | |
| 3 | 224.56033 | 3.00000 | 1.834807 | 42.71 | 0.5642 | 110.962 | -259.997 |
| 4 | 110.00664 | 1.07300 | | | | 105.788 | |
| 5 | 109.04325 | 16.13909 | 1.433870 | 95.10 | 0.5373 | 105.664 | 256.741 |
| 6 | 4424.50288 | 11.15000 | | | | 104.555 | |
| 7 | 126.24493 | 6.11321 | 1.433870 | 95.10 | 0.5373 | 101.236 | 800.585 |
| 8 | 195.13718 | 0.20000 | | | | 100.517 | |
| 9 | 129.34490 | 9.93743 | 1.433870 | 95.10 | 0.5373 | 99.584 | 374.873 |
| 10 | 611.07033 | 0.20000 | | | | 98.741 | |
| 11 | 154.85895 | 5.63552 | 1.433870 | 95.10 | 0.5373 | 95.574 | 745.713 |
| 12 | 293.07570 | (Variable) | | | | 94.468 | |
| 13 | 65.47852 | 1.00000 | 2.001000 | 29.13 | 0.5997 | 31.533 | -32.710 |
| 14 | 21.77703 | 9.28763 | | | | 27.329 | |
| 15 | -33.08475 | 0.90000 | 1.772499 | 49.60 | 0.5520 | 26.228 | -29.606 |
| 16 | 76.14260 | 0.70000 | | | | 26.527 | |
| 17 | 51.41584 | 5.76983 | 1.808095 | 22.76 | 0.6307 | 27.066 | 27.734 |
| 18 | -38.42118 | (Variable) | | | | 27.014 | |
| 19 | -31.39479 | 1.10000 | 1.772499 | 49.60 | 0.5520 | 26.824 | -53.218 |
| 20 | -132.82260 | (Variable) | | | | 26.958 | |
| 21 | -46.68721 | 1.30000 | 1.717004 | 47.92 | 0.5605 | 26.638 | -35.047 |
| 22 | 55.64767 | 3.15746 | 1.846490 | 23.90 | 0.6217 | 28.414 | 74.308 |
| 23 | 437.24951 | (Variable) | | | | 28.851 | |
| 24 | -2927.66593 | 4.71791 | 1.607379 | 56.81 | 0.5483 | 34.908 | 82.748 |
| 25 | -49.64514 | 0.15000 | | | | 35.462 | |
| 26 | 195.10408 | 3.29607 | 1.518229 | 58.90 | 0.5457 | 36.055 | 165.933 |
| 27 | -153.98173 | (Variable) | | | | 36.094 | |
| 28 | ∞ | 1.00000 | | | | 35.520 | |
| 29 | 44.79306 | 9.43204 | 1.487490 | 70.23 | 0.5300 | 35.148 | 54.269 |
| 30 | -60.65636 | 1.50000 | 1.834000 | 37.17 | 0.5774 | 34.030 | -65.046 |
| 31 | 552.48592 | 0.15000 | | | | 33.416 | |
| 32 | 22.85959 | 8.30910 | 1.487490 | 70.23 | 0.5300 | 32.004 | 68.066 |
| 33 | 64.22955 | 1.50000 | 1.882997 | 40.76 | 0.5667 | 29.477 | -36.446 |
| 34 | 21.28610 | 50.00000 | | | | 26.518 | |
| 35 | 137.04791 | 4.64093 | 1.517417 | 52.43 | 0.5564 | 29.348 | 67.749 |
| 36 | -46.84111 | 2.54355 | | | | 29.298 | |
| 37 | 85.64039 | 1.20000 | 1.785896 | 44.20 | 0.5631 | 26.827 | -49.105 |
| 38 | 26.53665 | 6.49533 | 1.517417 | 52.43 | 0.5564 | 25.555 | 33.780 |
| 39 | -47.54557 | 2.01000 | | | | 25.175 | |
| 40 | -99.45718 | 5.44373 | 1.517417 | 52.43 | 0.5564 | 23.364 | 63.428 |
| 41 | -25.22374 | 1.20000 | 1.834807 | 42.71 | 0.5642 | 22.624 | -26.572 |
| 42 | 197.04397 | 0.66799 | | | | 22.637 | |
| 43 | 28.37669 | 4.04093 | 1.487490 | 70.23 | 0.5300 | 22.921 | 64.833 |
| 44 | 257.13129 | 3.80000 | | | | 22513 | |

(continued)

| Surface number i | ri | di | ndi | vdi | θgFi | Effective diameter | Focal length |
|---|---|---|---|---|---|---|---|
| 45 | ∞ | 34.37500 | 1.608590 | 46.44 | 0.5664 | 31.250 | |
| 46 | ∞ | 13.75000 | 1.516800 | 64.17 | 0.5347 | 31.250 | |
| 47 | ∞ | 0.00000 | | | | 31.250 | |

Various data

Zoom ratio 40.00

| | Wide angle | Middle | Telephoto |
|---|---|---|---|
| Focal length | 11.00 | 69.57 | 440.00 |
| F number | 2.10 | 2.11 | 4.10 |
| Half angle of view | 26.57 | 4.52 | 0.72 |
| Image height | 5.50 | 5.50 | 5.50 |
| Total lens length | 386.75 | 386.75 | 386.75 |
| BF | 7.00 | 7.00 | 7.00 |
| d12 | 4.98 | 86.61 | 115.00 |
| d18 | 0.80 | 8.33 | 1.29 |
| d20 | 116.48 | 12.76 | 16.70 |
| d23 | 10.04 | 25.02 | 1.80 |
| d27 | 3.50 | 3.08 | 1.00 |
| d47 | 7.00 | 7.00 | 7.00 |
| Entrance pupil position | 93.01 | 624.56 | 2842.83 |
| Exit pupil position | 387.71 | 387.71 | 387.71 |
| Front principal point position | 104.33 | 706.85 | 3791.34 |
| Rear principal point position | -4.00 | -62.58 | -433.00 |

Zoom lens unit data

| Unit | Leading surface | Focal length | Lens configuration length | Front principal point position | Rear principal point position |
|---|---|---|---|---|---|
| 1 | 1 | 161.84 | 60.53 | 25.66 | -21.45 |
| 2 | 13 | -50.34 | 17.66 | -7.25 | -26.41 |
| 3 | 19 | -53.22 | 1.10 | -0.19 | -0.81 |
| 4 | 21 | -66.60 | 4.46 | 0.20 | -2.25 |
| 5 | 24 | 55.51 | 8.16 | 3.42 | -1.84 |
| 6 | 28 | 72.86 | 152.06 | 87.20 | -55.33 |

Single lens data

| Lens | Leading surface | Focal length |
|---|---|---|
| 1 | 1 | 839.44 |
| 2 | 3 | -260.00 |
| 3 | 5 | 256.74 |
| 4 | 7 | 800.58 |
| 5 | 9 | 374.87 |

(continued)

| Lens | Leading surface | Focal length |
|---|---|---|
| 6 | 11 | 745.71 |
| 7 | 13 | -32.71 |
| 8 | 15 | -29.61 |
| 9 | 17 | 27.73 |
| 10 | 19 | -53.22 |
| 11 | 21 | -35.05 |
| 12 | 22 | 74.31 |
| 13 | 24 | 82.75 |
| 14 | 26 | 165.93 |
| 15 | 29 | 54.27 |
| 16 | 30 | -65.05 |
| 17 | 32 | 68.07 |
| 18 | 33 | -36.45 |
| 19 | 35 | 67.75 |
| 20 | 37 | -49.10 |
| 21 | 38 | 33.78 |
| 22 | 40 | 63.43 |
| 23 | 41 | -26.57 |
| 24 | 43 | 64.83 |
| 25 | 45 | |
| 26 | 46 | |

<Numerical Embodiment 4>

Unit mm

Surface data

| Surface number i | ri | di | ndi | vdi | θgFi | Effective diameter | Focal length |
|---|---|---|---|---|---|---|---|
| 1 | 133.75354 | 6.24833 | 1.433870 | 95.10 | 0.5373 | 117.583 | 906.356 |
| 2 | 199.56924 | 1.00000 | | | | 116.786 | |
| 3 | 189.29688 | 3.00000 | 1.804000 | 46.57 | 0.5572 | 116.005 | -247.991 |
| 4 | 96.65642 | 1.07300 | | | | 109.451 | |
| 5 | 95.95230 | 18.78274 | 1.433870 | 95.10 | 0.5373 | 109.405 | 236.880 |
| 6 | 1313.32305 | 11.15000 | | | | 108.221 | |
| 7 | 136.68838 | 8.72199 | 1.433870 | 95.10 | 0.5373 | 100.636 | 465.603 |
| 8 | 412.37152 | 0.20000 | | | | 99.933 | |
| 9 | 311.26943 | 4.86909 | 1.433870 | 95.10 | 0.5373 | 99.513 | 1000.056 |
| 10 | 1089.24099 | 0.20000 | | | | 98.818 | |
| 11 | 121.32814 | 7.75732 | 1.433870 | 95.10 | 0.5373 | 94.754 | 469.565 |
| 12 | 293.07570 | (Variable) | | | | 93.660 | |
| 13 | 58.30507 | 1.00000 | 2.000690 | 25.46 | 0.6133 | 33.063 | -36.566 |
| 14 | 22.41453 | 11.31524 | | | | 28.727 | |
| 15 | -24.84358 | 0.90000 | 1.882997 | 40.76 | 0.5667 | 27.351 | -35.308 |
| 16 | -121.61849 | 0.70000 | | | | 28.611 | |
| 17 | 110.69969 | 6.30923 | 1.922860 | 18.90 | 0.6495 | 29.529 | 37.135 |
| 18 | -49.14178 | (Variable) | | | | 29.687 | |
| 19 | -98.78852 | 1.10000 | 1.772499 | 49.60 | 0.5520 | 28.773 | -66.913 |

(continued)

| Surface number i | ri | di | ndi | vdi | θgFi | Effective diameter | Focal length |
|---|---|---|---|---|---|---|---|
| 20 | 110.05178 | (Variable) | | | | 28.297 | |
| 21 | -51.04264 | 1.30000 | 1.717004 | 47.92 | 0.5605 | 28.239 | -37.278 |
| 22 | 57.30301 | 3.13167 | 1.846490 | 23.90 | 0.6217 | 30.027 | 84.539 |
| 23 | 269.78672 | (Variable) | | | | 30.448 | |
| 24 | 731.92415 | 4.50368 | 1.607379 | 56.81 | 0.5483 | 37.060 | 151.350 |
| 25 | -105.38942 | 0.15000 | | | | 37.977 | |
| 26 | 126.33215 | 3.53077 | 1.518229 | 58.90 | 0.5457 | 39.189 | 175.768 |
| 27 | -328.12184 | (Variable) | | | | 39.360 | |
| 28 | ∞ | 1.00000 | | | | 39.553 | |
| 29 | 291.14930 | 9.43204 | 1.487490 | 70.23 | 0.5300 | 39.756 | 71.018 |
| 30 | -39.02500 | 1.50000 | 1.834000 | 37.17 | 0.5774 | 39.875 | -190.462 |
| 31 | -52.53418 | 0.15000 | | | | 40.595 | |
| 32 | 47.98935 | 8.30910 | 1.487490 | 70.23 | 0.5300 | 38.562 | 57.493 |
| 33 | -64.06914 | 1.50000 | 1.882997 | 40.76 | 0.5667 | 37.940 | -47.596 |
| 34 | 125.61994 | 50.00000 | | | | 36.767 | |
| 35 | 114.54698 | 4.64093 | 1.517417 | 52.43 | 0.5564 | 30.568 | 141.126 |
| 36 | -201.14117 | 2.54355 | | | | 30.036 | |
| 37 | 65.92120 | 1.20000 | 1.785896 | 44.20 | 0.5631 | 28.417 | -85.491 |
| 38 | 33.09437 | 6.49533 | 1.517417 | 52.43 | 0.5564 | 27.399 | 38.823 |
| 39 | -48.23466 | 2.01000 | | | | 26.914 | |
| 40 | -99.31102 | 5.44373 | 1.517417 | 52.43 | 0.5564 | 24.165 | 74.992 |
| 41 | -28.51659 | 1.20000 | 1.834807 | 42.71 | 0.5642 | 22.459 | -31.739 |
| 42 | 413.36921 | 0.66799 | | | | 21.750 | |
| 43 | 40.59485 | 4.04093 | 1.487490 | 70.23 | 0.5300 | 21.242 | 126.119 |
| 44 | 114.83011 | 3.80000 | | | | 20.569 | |
| 45 | ∞ | 34.37500 | 1.608590 | 46.44 | 0.5664 | 31.250 | |
| 46 | ∞ | 13.75000 | 1.516800 | 64.17 | 0.5347 | 31.250 | |
| 47 | ∞ | 0.00000 | | | | 31.250 | |

Various data

Zoom ratio 40.00

| | Wide angle | Middle | Telephoto |
|---|---|---|---|
| Focal length | 11.00 | 69.58 | 440.00 |
| F number | 2.10 | 2.10 | 4.10 |
| Half angle of view | 26.57 | 4.52 | 0.72 |
| Image height | 5.50 | 5.50 | 5.50 |
| Total lens length | 400.14 | 400.14 | 400.14 |
| BF | 7.00 | 7.00 | 7.00 |
| d12 | 0.70 | 85.48 | 112.17 |
| d18 | 0.48 | 9.14 | 0.98 |
| d20 | 129.42 | 26.37 | 28.19 |
| d23 | 10.04 | 21.97 | 1.80 |
| d27 | 3.50 | 1.19 | 1.00 |
| d47 | 7.00 | 7.00 | 7.00 |
| Entrance pupil position | 91.53 | 674.07 | 3135.55 |
| Exit pupil position | -293.48 | -293.48 | -293.48 |

(continued)

| | Wide angle | Middle | Telephoto |
|---|---|---|---|
| Front principal point position | 102.13 | 727.54 | 2931.25 |
| Rear principal point position | -4.00 | -62.58 | -433.00 |

Zoom lens unit data

| Unit | Leading surface | Focal length | Lens configuration length | Front principal point position | Rear principal point position |
|---|---|---|---|---|---|
| 1 | 1 | 161.84 | 63.00 | 26.96 | -22.54 |
| 2 | 13 | -43.60 | 20.22 | -4.06 | -24.07 |
| 3 | 19 | -66.91 | 1.10 | 0.29 | -0.33 |
| 4 | 21 | -66.60 | 4.43 | 0.40 | -2.03 |
| 5 | 24 | 81.61 | 8.18 | 2.98 | -23.0 |
| 6 | 28 | 74.73 | 152.06 | 54.70 | -89.43 |

Single lens data

| Lens | Leading surface | Focal length |
|---|---|---|
| 1 | 1 | 906.36 |
| 2 | 3 | -247.99 |
| 3 | 5 | 236.88 |
| 4 | 7 | 465.60 |
| 5 | 9 | 1000.06 |
| 6 | 11 | 469.57 |
| 7 | 13 | -36.57 |
| 8 | 15 | -35.31 |
| 9 | 17 | 37.14 |
| 10 | 19 | -66.91 |
| 11 | 21 | -37.28 |
| 12 | 22 | 84.54 |
| 13 | 24 | 151.35 |
| 14 | 26 | 175.77 |
| 15 | 29 | 71.02 |
| 16 | 30 | -190.46 |
| 17 | 32 | 57.49 |
| 18 | 33 | -47.60 |
| 19 | 35 | 141.13 |
| 20 | 37 | -85.49 |
| 21 | 38 | 38.82 |
| 22 | 40 | 74.99 |
| 23 | 41 | -31.74 |
| 24 | 43 | 126.12 |
| 25 | 45 | |
| 26 | 46 | |

<Numerical Embodiment 5>

Unit mm

Surface data

| Surface number i | ri | di | ndi | vdi | θgFi | Effective diameter | Focal length |
|---|---|---|---|---|---|---|---|
| 1 | 131.89273 | 6.37363 | 1.433870 | 95.10 | 0.5373 | 117.512 | 884.796 |
| 2 | 197.72254 | 1.00000 | | | | 116.708 | |
| 3 | 187.56918 | 3.00000 | 1.816000 | 46.62 | 0.5568 | 115.920 | -247.992 |
| 4 | 96.87752 | 1.07300 | | | | 109.392 | |
| 5 | 96.25984 | 18.75418 | 1.433870 | 95.10 | 0.5373 | 109.339 | 236.775 |
| 6 | 1386.50807 | 11.15000 | | | | 108.150 | |
| 7 | 135.72353 | 7.39036 | 1.433870 | 95.10 | 0.5373 | 100.489 | 586.041 |
| 8 | 285.49472 | 0.20000 | | | | 99.785 | |
| 9 | 233.53768 | 6.20429 | 1.433870 | 95.10 | 0.5373 | 99.416 | 684.621 |
| 10 | 1073.75429 | 0.20000 | | | | 98.714 | |
| 11 | 122.66344 | 7.65578 | 1.433870 | 95.10 | 0.5373 | 94.674 | 478.488 |
| 12 | 293.07570 | (Variable) | | | | 93.568 | |
| 13 | 66.75163 | 1.00000 | 2.000690 | 25.46 | 0.6133 | 34.240 | -38.193 |
| 14 | 24.26271 | 11.50930 | | | | 29.904 | |
| 15 | -25.64238 | 0.90000 | 1.882997 | 40.76 | 0.5667 | 28.456 | -41.416 |
| 16 | -86.06041 | 0.70000 | | | | 29.645 | |
| 17 | 144.31474 | 6.46147 | 1.922860 | 18.90 | 0.6495 | 30.374 | 37.445 |
| 18 | -45.18018 | 0.48366 | | | | 30.467 | |
| 19 | -87.69877 | 1.10000 | 1.772499 | 49.60 | 0.5520 | 29.161 | -52.021 |
| 20 | 75.24507 | (Variable) | | | | 28.389 | |
| 21 | -54.09102 | 1.30000 | 1.717004 | 47.92 | 0.5605 | 27.970 | -37.685 |
| 22 | 55.07687 | 3.05060 | 1.846490 | 23.90 | 0.6217 | 29.628 | 86.344 |
| 23 | 211.47936 | (Variable) | | | | 30.022 | |
| 24 | 328.70349 | 3.42086 | 1.607379 | 56.81 | 0.5483 | 37.141 | 215.706 |
| 25 | -218.50217 | 0.15000 | | | | 37.834 | |
| 26 | 112.27618 | 4.26968 | 1.518229 | 58.90 | 0.5457 | 38.995 | 296.377 |
| 27 | 407.49715 | (Variable) | | | | 39.464 | |
| 28 | ∞ | 1.00000 | | | | 39.612 | |
| 29 | 163.01054 | 9.43204 | 1.487490 | 70.23 | 0.5300 | 40.259 | 61.086 |
| 30 | -35.89070 | 1.50000 | 1.834000 | 37.17 | 0.5774 | 40.469 | -180.299 |
| 31 | -47.94674 | 0.15000 | | | | 41.484 | |
| 32 | 72.01768 | 8.30910 | 1.487490 | 70.23 | 0.5300 | 40.112 | 61.893 |
| 33 | -50.25206 | 1.50000 | 1.882997 | 40.76 | 0.5667 | 39.688 | -60.779 |
| 34 | -737.80496 | 50.00000 | | | | 39.418 | |
| 35 | 66.05279 | 4.64093 | 1.517417 | 52.43 | 0.5564 | 31.919 | 148.393 |
| 36 | 448.87983 | 2.54355 | | | | 31.141 | |
| 37 | 83.61369 | 1.20000 | 1.785896 | 44.20 | 0.5631 | 29.816 | -89.262 |
| 38 | 38.01535 | 6.49533 | 1.517417 | 52.43 | 0.5564 | 28.832 | 41.578 |
| 39 | -47.15253 | 2.01000 | | | | 28.411 | |
| 40 | -99.41582 | 5.44373 | 1.517417 | 52.43 | 0.5564 | 25.441 | 71.858 |
| 41 | -27.65806 | 1.20000 | 1.834807 | 42.71 | 0.5642 | 23.866 | -31.421 |
| 42 | 580.49114 | 0.66799 | | | | 23.155 | |
| 43 | 49.30343 | 4.04093 | 1.501270 | 56.50 | 0.5536 | 22.608 | 118.529 |
| 44 | 276.10611 | 3.80000 | | | | 21.573 | |

(continued)

| Surface number i | ri | di | ndi | vdi | θgFi | Effective diameter | Focal length |
|---|---|---|---|---|---|---|---|
| 45 | ∞ | 34.37500 | 1.608590 | 46.44 | 0.5664 | 31.250 | |
| 46 | ∞ | 13.75000 | 1.516800 | 64.17 | 0.5347 | 31.250 | |
| 47 | ∞ | 0.00000 | | | | 31.250 | |

Various data

Zoom ratio 40.00

| | Wide angle | Middle | Telephoto |
|---|---|---|---|
| Focal length | 11.00 | 69.58 | 440.00 |
| F number | 2.10 | 2.10 | 4.10 |
| Half angle of view | 26.57 | 4.52 | 0.72 |
| Image height | 5.50 | 5.50 | 5.50 |
| Total lens length | 403.26 | 403.26 | 403.26 |
| BF | 10.00 | 10.00 | 10.00 |
| d12 | 0.97 | 85.81 | 111.56 |
| d20 | 129.35 | 35.23 | 28.64 |
| d23 | 10.04 | 20.40 | 1.78 |
| d27 | 3.50 | 2.41 | 1.87 |
| d47 | 10.00 | 10.00 | 10.00 |
| Entrance pupil position | 93.27 | 672.83 | 3155.82 |
| Exit pupil position | -257.62 | -257.62 | -257.62 |
| Front principal point position | 103.82 | 724.32 | 2872.40 |
| Rear principal point position | -1.00 | -59.58 | -430.00 |

Zoom lens unit data

| Unit | Leading surface | Focal length | Lens configuration length | Front principal point position | Rear principal point position |
|---|---|---|---|---|---|
| 1 | 1 | 161.84 | 63.00 | 26.76 | -22.74 |
| 2 | 13 | -21.52 | 22.15 | 4.50 | -11.97 |
| 3 | 21 | -66.60 | 4.35 | 0.52 | -1.86 |
| 4 | 24 | 124.83 | 7.84 | 1.25 | -3.82 |
| 5 | 28 | 67.44 | 152.06 | 47.19 | -100.49 |

Single lens data

| Lens | Leading surface | Focal length |
|---|---|---|
| 1 | 1 | 884.80 |
| 2 | 3 | -247.99 |
| 3 | 5 | 236.77 |
| 4 | 7 | 586.04 |
| 5 | 9 | 684.62 |
| 6 | 11 | 478.49 |
| 7 | 13 | -38.19 |

(continued)

| Lens | Leading surface | Focal length |
|------|-----------------|--------------|
| 8 | 15 | -41.42 |
| 9 | 17 | 37.44 |
| 10 | 19 | -52.02 |
| 11 | 21 | -37.68 |
| 12 | 22 | 86.34 |
| 13 | 24 | 215.71 |
| 14 | 26 | 296.38 |
| 15 | 29 | 61.09 |
| 16 | 30 | -180.30 |
| 17 | 32 | 61.89 |
| 18 | 33 | -60.78 |
| 19 | 35 | 148.39 |
| 20 | 37 | -89.26 |
| 21 | 38 | 41.58 |
| 22 | 40 | 71.86 |
| 23 | 41 | -31.42 |
| 24 | 43 | 118.53 |
| 25 | 45 | |
| 26 | 46 | |

<Numerical Embodiment 6>

Unit mm

Surface data

| Surface number i | ri | di | ndi | vdi | θgFi | Effective diameter | Focal length |
|------------------|-----|-----|-----|-----|------|--------------------|--------------|
| 1 | -25110.14280 | 6.00000 | 1.834807 | 42.73 | 0.5648 | 203.582 | -384.675 |
| 2 | 327.15837 | 1.59003 | | | | 196.726 | |
| 3 | 321.68109 | 32.56730 | 1.433870 | 95.10 | 0.5373 | 196.600 | 421.518 |
| 4 | -413.25245 | 32.25814 | | | | 195.291 | |
| 5 | 337.42453 | 16.36645 | 1.433870 | 95.10 | 0.5373 | 195.265 | 844.528 |
| 6 | 4082.93537 | 0.25000 | | | | 194.793 | |
| 7 | 258.04199 | 22.27056 | 1.433870 | 95.10 | 0.5373 | 191.328 | 582.698 |
| 8 | -13870.84436 | 1.20000 | | | | 189.995 | |
| 9 | 165.53266 | 15.30800 | 1.433870 | 95.10 | 0.5373 | 175.221 | 819.559 |
| 10 | 300.37387 | (Variable) | | | | 173.007 | |
| 11 | 572.85560 | 2.35000 | 1.882997 | 40.76 | 0.5667 | 50.043 | -51.767 |
| 12 | 42.47898 | 18.65241 | | | | 43.343 | |
| 13 | -34.32253 | 1.45000 | 1.772499 | 49.60 | 0.5520 | 39.087 | -63.653 |
| 14 | -114.48795 | 7.69984 | 1.808095 | 22.76 | 0.6307 | 41.807 | 71.425 |
| 15 | -39.80319 | 0.19709 | | | | 43.607 | |
| 16 | -58.21530 | 2.00000 | 1.696797 | 55.53 | 0.5434 | 43.680 | -91.477 |
| 17 | -651.73077 | (Variable) | | | | 45.694 | |
| 18 | 517.79308 | 7.28014 | 1.603112 | 60.64 | 0.5415 | 80.813 | 285.620 |
| 19 | -258.28628 | 1.00500 | | | | 81.995 | |
| 20 | 138.30845 | 20.76855 | 1.438750 | 94.93 | 0.5340 | 86.072 | 149.814 |
| 21 | -120.09002 | 9.59366 | | | | 86.322 | |

(continued)

| Surface number i | ri | di | ndi | vdi | θgFi | Effective diameter | Focal length |
|---|---|---|---|---|---|---|---|
| 22 | 170.24037 | 2.50000 | 1.717362 | 29.52 | 0.6047 | 79.879 | -156.766 |
| 23 | 67.62775 | 8.82607 | 1.438750 | 94.93 | 0.5340 | 76.353 | 359.235 |
| 24 | 113.51550 | (Variable) | | | | 75.695 | |
| 25 | 294.14761 | 14.10652 | 1.593490 | 67.00 | 0.5361 | 77.245 | 147.839 |
| 26 | -123.42655 | (Variable) | | | | 76.840 | |
| 27 | ∞ | 4.92616 | | | | 33.372 | |
| 28 | -69.17507 | 1.80000 | 1.816000 | 46.62 | 0.5568 | 31.665 | -39.799 |
| 29 | 62.53126 | 5.11643 | 1.808095 | 22.76 | 0.6307 | 31.262 | 58.913 |
| 30 | -200.73400 | 7.41605 | | | | 31.083 | |
| 31 | -28.94191 | 1.49977 | 1.816000 | 46.62 | 0.5568 | 30.102 | -25.444 |
| 32 | 76.55422 | 9.97320 | 1.548141 | 45.79 | 0.5686 | 33.098 | 38.975 |
| 33 | -28.46614 | 15.63678 | | | | 34.429 | |
| 34 | 162.87792 | 9.19327 | 1.531717 | 48.84 | 0.5631 | 36.429 | 65.718 |
| 35 | -43.88345 | 1.78139 | | | | 36.342 | |
| 36 | -90.37000 | 1.50000 | 1.882997 | 40.76 | 0.5667 | 33.978 | -33.943 |
| 37 | 45.59080 | 8.60872 | 1.518229 | 58.90 | 0.5457 | 33.317 | 43.578 |
| 38 | -42.19588 | 0.59328 | | | | 33.433 | |
| 39 | 170.24410 | 6.58015 | 1.496999 | 81.54 | 0.5375 | 31.604 | 56.333 |
| 40 | -33.19308 | 1.50000 | 1.882997 | 40.76 | 0.5667 | 30.967 | -40.510 |
| 41 | -437.83142 | 0.56165 | | | | 30.865 | |
| 42 | 82.70616 | 5.72967 | 1.522494 | 59.84 | 0.5440 | 30.636 | 71.005 |
| 43 | -66.15100 | 10.00000 | | | | 30.136 | |
| 44 | ∞ | 33.00000 | 1.608590 | 46.44 | 0.5664 | 40.000 | |
| 45 | ∞ | 13.20000 | 1.516330 | 64.14 | 0.5353 | 40.000 | |
| 46 | ∞ | 0.00000 | | | | 50.000 | |

Aspherical surface data

Eleventh surface
K =-5.06977e+002 A 4= 8.85363e-007 A 6=-2.49171e-010 A 8= 2.80963e-014
Eighteenth surface
K =-7.54553e-001 A 4=-3.41767e-007 A 6=-4.00004e-012 A 8= 4.18689e-015

Various data

Zoom ratio 79.99

| | Wide angle | Middle | Telephoto |
|---|---|---|---|
| Focal length | 10.00 | 89.44 | 799.90 |
| F number | 1.80 | 1.80 | 4.20 |
| Half angle of view | 28.81 | 3.52 | 0.39 |
| Image height | 5.50 | 5.50 | 5.50 |
| Total lens length | 725.60 | 725.60 | 725.60 |
| BF | 11.72 | 11.72 | 11.72 |
| d10 | 2.94 | 142.63 | 180.77 |
| d17 | 325.65 | 138.28 | 2.78 |
| d24 | 12.28 | 30.65 | 67.33 |

(continued)

|  | Wide angle | Middle | Telephoto |
|---|---|---|---|
| d26 | 10.14 | 39.46 | 100.14 |
| d46 | 11.72 | 11.72 | 11.72 |
| Entrance pupil position | 147.70 | 1072.75 | 11741.95 |
| Exit pupil position | -24235.14 | -24235.14 | -24235.14 |
| Front principal point position | 157.70 | 1161.86 | 12515.46 |
| Rear principal point position | 1.72 | -77.71 | -788.18 |

Zoom lens unit data

| Unit | Leading surface | Focal length | Lens configuration length | Front principal point position | Rear principal point position |
|---|---|---|---|---|---|
| 1 | 1 | 246.00 | 127.81 | 74.83 | -19.86 |
| 2 | 11 | -28.50 | 32.35 | 6.49 | -18.82 |
| 3 | 18 | 137.46 | 49.97 | -5.27 | -38.64 |
| 4 | 25 | 147.84 | 14.11 | 6.31 | -2.65 |
| 5 | 27 | 61.57 | 138.62 | 61.41 | 9.03 |

Single lens data

| Lens | Leading surface | Focal length |
|---|---|---|
| 1 | 1 | -384.67 |
| 2 | 3 | 421.52 |
| 3 | 5 | 844.53 |
| 4 | 7 | 582.70 |
| 5 | 9 | 819.56 |
| 6 | 11 | -51.77 |
| 7 | 13 | -63.65 |
| 8 | 14 | 71.43 |
| 9 | 16 | -91.48 |
| 10 | 18 | 285.62 |
| 11 | 20 | 149.81 |
| 12 | 22 | -156.77 |
| 13 | 23 | 359.23 |
| 14 | 25 | 147.84 |
| 15 | 28 | -39.80 |
| 16 | 29 | 58.91 |
| 17 | 31 | -25.44 |
| 18 | 32 | 38.98 |
| 19 | 34 | 65.72 |
| 20 | 36 | -33.94 |
| 21 | 37 | 43.58 |
| 22 | 39 | 56.33 |
| 23 | 40 | -40.51 |
| 24 | 42 | 71.00 |
| 25 | 44 |  |
| 26 | 45 |  |

<Numerical Embodiment 7>

Unit mm

Surface data

| Surface number i | ri | di | ndi | vdi | θgFi | Effective diameter | Focal length |
|---|---|---|---|---|---|---|---|
| 1 | -462.31573 | 2.20000 | 1.882997 | 40.76 | 0.5667 | 90.027 | -99.360 |
| 2 | 109.30856 | 3.35229 | | | | 84.667 | |
| 3 | 134.13128 | 16.02660 | 1.433870 | 95.10 | 0.5373 | 84.615 | 158.763 |
| 4 | -137.17894 | 9.04050 | | | | 84.045 | |
| 5 | 150.39507 | 9.19607 | 1.433870 | 95.10 | 0.5373 | 76.162 | 217.082 |
| 6 | -249.00153 | 0.15000 | | | | 75.319 | |
| 7 | 85.12758 | 8.06231 | 1.433870 | 95.10 | 0.5373 | 65.103 | 190.346 |
| 8 | -2931.92466 | 0.15000 | | | | 64.216 | |
| 9 | 51.61386 | 7.85260 | 1.433870 | 95.10 | 0.5373 | 56.925 | 151.459 |
| 10 | 227.37570 | (Variable) | | | | 56.124 | |
| 11 | -310.32731 | 0.90000 | 2.003300 | 28.27 | 0.5980 | 21.898 | -14.674 |
| 12 | 15.61403 | 4.60329 | | | | 18.399 | |
| 13 | -41.15275 | 5.79711 | 1.922860 | 18.90 | 0.6495 | 18.204 | 21.411 |
| 14 | -14.37680 | 0.70000 | 1.882997 | 40.76 | 0.5667 | 18.379 | -13.868 |
| 15 | 87.92415 | 0.20000 | | | | 18.453 | |
| 16 | 30.36409 | 3.06348 | 1.666800 | 33.05 | 0.5957 | 18.716 | 46.956 |
| 17 | 784.99832 | (Variable) | | | | 18.504 | |
| 18 | -41.83358 | 0.70000 | 1.756998 | 47.82 | 0.5565 | 18.798 | -21.101 |
| 19 | 26.23641 | 2.75535 | 1.846490 | 23.90 | 0.6217 | 20.059 | 48.795 |
| 20 | 67.29618 | (Variable) | | | | 20.482 | |
| 21 | -183.99508 | 4.04673 | 1.638539 | 55.38 | 0.5484 | 23.483 | 47.183 |
| 22 | -26.20784 | 0.15000 | | | | 24.273 | |
| 23 | -230.48273 | 2.46359 | 1.516330 | 64.14 | 0.5353 | 24.977 | 157.695 |
| 24 | -60.55272 | (Variable) | | | | 25.276 | |
| 25 | ∞ | 1.30000 | | | | 25.479 | |
| 26 | 32.16093 | 6.87396 | 1.517417 | 52.43 | 0.5564 | 25.836 | 35.421 |
| 27 | -39.91453 | 0.90000 | 1.834807 | 42.71 | 0.5642 | 25.339 | -35.813 |
| 28 | 123.06847 | 32.40000 | | | | 25.068 | |
| 29 | 66.78446 | 5.69362 | 1.496999 | 81.54 | 0.5375 | 26.152 | 55.622 |
| 30 | -46.06015 | 2.22280 | | | | 25.871 | |
| 31 | 200.96524 | 1.40000 | 1.834030 | 37.20 | 0.5775 | 24.243 | -25.397 |
| 32 | 19.21121 | 5.63992 | 1.487490 | 70.23 | 0.5300 | 23.274 | 47.224 |
| 33 | 103.12642 | 1.93515 | | | | 23.532 | |
| 34 | 1557.71280 | 7.31033 | 1.501270 | 56.50 | 0.5536 | 23.895 | 33.202 |
| 35 | -16.86785 | 1.40000 | 1.834807 | 42.71 | 0.5642 | 24.271 | -34.757 |
| 36 | -41.49741 | 0.14985 | | | | 26.400 | |
| 37 | 104.48429 | 6.21013 | 1.501270 | 56.50 | 0.5536 | 27.470 | 45.563 |
| 38 | -28.80137 | 4.00000 | | | | 27.695 | |
| 39 | ∞ | 33.00000 | 1.608590 | 46.44 | 0.5664 | 40.000 | |
| 40 | ∞ | 13.20000 | 1.516330 | 64.14 | 0.5353 | 40.000 | |
| 41 | ∞ | 0.00000 | | | | 40.000 | |

Various data

Zoom ratio 17.00

|  | Wide angle | Middle | Telephoto |
|---|---|---|---|
| Focal length | 8.00 | 33.07 | 136.00 |
| F number | 1.91 | 1.94 | 2.50 |
| Half angle of view | 34.51 | 9.44 | 2.32 |
| Image height | 5.50 | 5.50 | 5.50 |
| Total lens length | 270.34 | 270.34 | 270.34 |
| BF | 7.49 | 7.49 | 7.49 |
| d10 | 1.05 | 33.34 | 48.74 |
| d17 | 51.11 | 6.20 | 3.09 |
| d20 | 4.70 | 10.23 | 2.88 |
| d24 | 0.95 | 8.03 | 3.09 |
| d41 | 7.49 | 7.49 | 7.49 |
| Entrance pupil position | 51.60 | 164.87 | 543.25 |
| Exit pupil position | 196.81 | 196.81 | 196.81 |
| Front principal point position | 59.94 | 203.72 | 776.95 |
| Rear principal point position | -0.51 | -25.58 | -128.51 |

Zoom lens unit data

| Unit | Leading surface | Focal length | Lens configuration length | Front principal point position | Rear principal point position |
|---|---|---|---|---|---|
| 1 | 1 | 65.01 | 56.03 | 35.83 | -0.11 |
| 2 | 11 | -13.49 | 15.26 | 0.20 | -10.77 |
| 3 | 18 | -36.17 | 3.46 | 0.81 | -1.04 |
| 4 | 21 | 36.66 | 6.66 | 3.30 | -0.93 |
| 5 | 25 | 51.48 | 123.64 | 65.08 | -49.62 |

Single lens data

| Lens | Leading surface | Focal length |
|---|---|---|
| 1 | 1 | -99.36 |
| 2 | 3 | 158.76 |
| 3 | 5 | 217.08 |
| 4 | 7 | 190.35 |
| 5 | 9 | 151.46 |
| 6 | 11 | -14.67 |
| 7 | 13 | 21.41 |
| 8 | 14 | -13.87 |
| 9 | 16 | 46.96 |
| 10 | 18 | -21.10 |
| 11 | 19 | 48.80 |
| 12 | 21 | 47.18 |
| 13 | 23 | 157.70 |

(continued)

| Lens | Leading surface | Focal length |
|---|---|---|
| 14 | 26 | 35.42 |
| 15 | 27 | -35.81 |
| 16 | 29 | 55.62 |
| 17 | 31 | -25.40 |
| 18 | 32 | 47.22 |
| 19 | 34 | 33.20 |
| 20 | 35 | -34.76 |
| 21 | 37 | 45.56 |
| 22 | 39 | |
| 23 | 40 | |

[Table 1]

| Table 1 Numerical values corresponding to each of conditional expressions in Numerical Embodiments 1 to 7 | | | | | | | | |
|---|---|---|---|---|---|---|---|---|
| **Conditional expression** | | **Numerical embodiment** | | | | | | |
| | | 1 | 2 | 3 | 4 | 5 | 6 | 7 |
| (1) | vn | 40.78 | 40.78 | 42.71 | 46.57 | 46.62 | 42.73 | 40.76 |
| (2) | Nn+0.01×vn | 2.259 | 2.259 | 2.262 | 2.270 | 2.282 | 2.262 | 2.291 |
| (3) | Nn | 1.852 | 1.852 | 1.835 | 1.804 | 1.816 | 1.835 | 1.883 |
| (4) | \|fn/f1\| | 1.85 | 1.54 | 1.61 | 1.53 | 1.53 | 1.56 | 1.53 |
| (5) | vpa | 95.10 | 84.89 | 95.10 | 95.10 | 95.10 | 95.10 | 95.10 |
| (6) | (θp2-θn2)/(vn2-vp2) | 0.00550 | 0.00550 | 0.00487 | 0.00552 | 0.00552 | 0.00356 | 0.00550 |
| (7) | \|f1/f2\| | 7.22 | 6.01 | 3.22 | 3.71 | 7.52 | 8.63 | 4.82 |

[Embodiment 8]

(Image pickup apparatus)

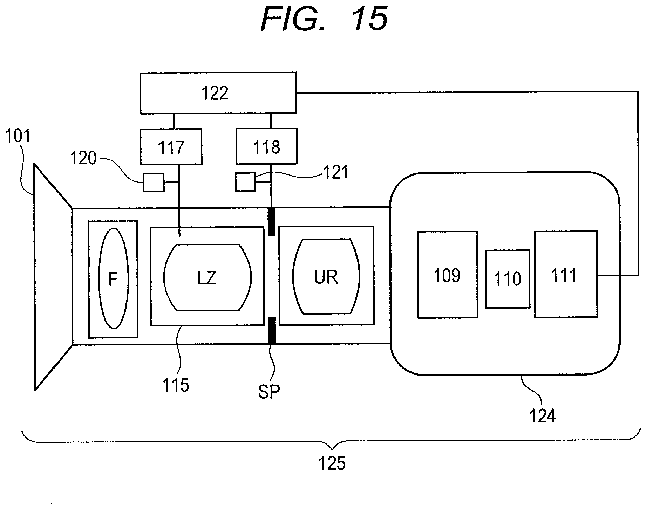

FIG. 15 illustrates a schematic view of an image pickup apparatus (television camera system) which uses the zoom lens of any one of Embodiments 1 to 7 as a photographing optical system. In FIG. 15, a zoom lens 101 is any one of zoom lenses in Embodiments 1 to 7. A camera 124 is shown. The zoom lens 101 is structured so as to be detachable from the camera 124. An image pickup apparatus 125 is structured by the camera 124 and the zoom lens 101 which is mounted thereon. The zoom lens 101 has a first lens unit F for focusing, a zooming lens unit LZ, and a relay lens unit UR for imaging. The zooming lens unit LZ includes a lens unit which moves for zooming. An aperture stop SP is illustrated. A driving mechanism 115 such as a helicoid and a cam drives the zooming lens unit LZ in the optical axis direction. Motors (driving unit) 117 and 118 electrically drive the driving mechanism 115 and the aperture stop SP. Detectors 120 and 121 such as an encoder, a potentiometer and a photosensor detect a position on the optical axis of the zooming lens unit LZ and an aperture diameter of the aperture stop SP. In the camera 124, a glass block 109 corresponds to an optical filter or a color separation optical system in the camera 124, and a solid-state image pickup element 110 (photoelectric conversion element) is a CCD sensor, a CMOS sensor or the like, and receives light of a subject image which has been formed by the zoom lens 101. Incidentally, when the electronic image pickup element is used, an output image can be further enhanced to a high image quality by an operation of electronically correcting the aberration. In addition, CPUs 111 and 122 control various drives of the camera 124 and the zoom lens 101.

Thus, when being applied to a digital video camera, a TV camera or a camera for cinema, the zoom lens according to the present invention achieves an image pickup apparatus having a high optical performance.

While the present invention has been described with reference to exemplary embodiments, it is to be understood that the invention is not limited to the disclosed exemplary embodiments.

## Claims

1. A zoom lens comprising in order from an object side to an image side:

   a first lens unit (U1) having a positive refractive power and configured not to move for zooming; a second lens unit (U2) having a negative refractive power and configured to move to the image side for zooming from a wide angle end to a telephoto end; a third lens unit (U3) configured to move for zooming; and a relay lens unit (UR) having a positive refractive power and configured not to move for zooming,
   wherein the first lens unit consists of five or six lenses concluding, in order from the object side to the image side, with a negative lens, a positive lens, a positive lens, a positive lens and a positive lens, and conditional expressions

$$1.79 < Nn < 1.91,$$

   and

$$1.53 \leq |fn / f1| < 2.0$$

   are satisfied, where Nn represents a refractive index of the negative lens in the first lens unit, fn represents a focal length of the negative lens, and f1 represents a focal length of the first lens unit,
   **characterized in that**
   furthermore, the conditional expressions

$$39 < \nu n < 48,$$

   and

$$2.24 < Nn + 0.01 \times \nu n < 2.32$$

   are satisfied, where $\nu n$ represents an Abbe number of the negative lens, the Abbe number $\nu$ being expressed by an expression

$$\nu = (Nd - 1) / (NF - NC)$$

   where NF, Nd and NC represent refractive indices with respect to an F-line, a d-line and a C-line of Fraunhofer lines, respectively, and wherein said third lens unit (U3) has negative power, and wherein, either

   **a)** said first lens unit consists of six lenses, the lens closest to the object side is a positive lens, and said zoom lens comprises a negative fourth lens unit (U4) that moves for zooming and a positive fifth lens unit (U5) that moves for zooming, arranged in this order from the object side to the image side between said third lens unit (U3) and said relay lens (UR);
   **b)** said first lens unit consists of six lenses, the lens closest to the object side is a positive lens, and said zoom lens comprises a positive fourth lens unit (U4) that moves for zooming and is arranged between said third lens unit (U3) and said relay lens (UR); or
   **c)** said first lens unit consists of five lenses, and said zoom lens comprises a positive fourth lens unit (U4) which moves for zooming and is arranged between said third lens unit (U3) and said relay lens (UR).

2. The zoom lens according to claim 1, wherein a conditional expression

$$77 < \nu pa < 100$$

   is satisfied, where $\nu pa$ represents an average of values of the Abbe number of the positive lenses in the first lens unit.

3. The zoom lens according to claim 1 or 2, wherein the zoom lens consists of, in order from the object side to the image side, the first lens unit, the second lens unit, the third lens unit configured to move for zooming, the fourth lens unit configured to move for zooming, and the relay lens unit.

4. The zoom lens according to claim 1 or 2, wherein the zoom lens consists of, in order from the object side to the image side, the first lens unit, the second lens unit, the third lens unit configured to move for zooming, the fourth lens unit configured to move for zooming, the fifth lens unit configured to move for zooming, and the relay lens unit.

5. The zoom lens according to any one of claims 1 to 4, wherein a conditional expression

$$3.1 \times 10^{-3} < (\theta p2 - \theta n2) / (\nu n2 - \nu p2) < 6.0 \times 10^{-3},$$

is satisfied, where vp2 and θp2 respectively represent the Abbe number and a partial dispersion ratio of a positive lens having the Abbe number smallest of ones of the Abbe number of positive lenses included in the second lens unit, and vn2 and θn2 respectively represent the Abbe number and a partial dispersion ratio of a negative lens having the Abbe number smallest of ones of the Abbe number of negative lenses included in the second lens unit, the partial dispersion ratio θ being expressed by an expression

$$\theta = (Ng - NF) / (NF - NC),$$

where Ng represents a refractive index with respect to a g-line of Fraunhofer lines.

6. The zoom lens according to any one of claims 1 to 5, wherein a conditional expression

$$3 < |f1 / f2| < 9$$

is satisfied, where f2 represents a focal length of the second lens unit.

7. An image pickup apparatus comprising:

the zoom lens according to any one of claims 1 to 6; and
an image pickup element configured to receive an image formed by the zoom lens.

**Patentansprüche**

1. Zoomobjektiv, umfassend in der Reihenfolge von einer Objektseite zu einer Bildseite:

eine erste Linseneinheit (U1), die eine positive Brechkraft aufweist und konfiguriert ist, sich zum Zoomen nicht zu bewegen; eine zweite Linseneinheit (U2), die eine negative Brechkraft aufweist und konfiguriert ist, sich zum Zoomen von einem Weitwinkelende zu einem Teleobjektivende zur Bildseite zu bewegen; eine dritte Linseneinheit (U3), die konfiguriert ist, sich zum Zoomen zu bewegen; und eine Relais-Linseneinheit (UR), die eine positive Brechkraft aufweist und konfiguriert ist, sich zum Zoomen nicht zu bewegen, wobei die erste Linseneinheit aus fünf oder sechs Linsen zusammengesetzt ist, die in der Reihenfolge von der Objektseite zur Bildseite mit einer negativen Linse, einer positiven Linse, einer positiven Linse, einer positiven Linse und einer positiven Linse enden, und Bedingungen

$$1{,}79 < Nn < 1{,}91,$$

und

$$1{,}53 \leq |fn / f1| < 2{,}0$$

erfüllt sind, wobei Nn einen Brechungsindex der negativen Linse in der ersten Linseneinheit darstellt, fn eine Brennweite der negativen Linse darstellt und f1 eine Brennweite der ersten Linseneinheit darstellt, **dadurch gekennzeichnet, dass** ferner die Bedingungen

$$39 < vn < 48,$$

$$2{,}24 < Nn + 0{,}01 \times vn < 2{,}32$$

erfüllt sind, wobei vn eine Abbe-Zahl der negativen Linse darstellt, wobei die Abbe-Zahl v durch einen Ausdruck

$$v = (Nd - 1) / (NF - NC)$$

ausgedrückt wird, wobei NF, Nd und NC Brechungsindizes in Bezug auf eine F-Linie, eine d-Linie bzw. eine C-Linie von Fraunhofer-Linien darstellen, und wobei die dritte Linseneinheit (U3) eine negative Brechkraft aufweist, und wobei entweder

a) die erste Linseneinheit aus sechs Linsen zusammengesetzt ist, wobei die Linse, die der Objektseite am nächsten ist, eine positive Linse ist, und das Zoomobjektiv eine negative vierte Linseneinheit (U4), die sich zum Zoomen bewegt, und eine positive fünfte Linseneinheit (U5), die sich zum Zoomen bewegt, umfasst, die in dieser Reihenfolge von der Objektseite zur Bildseite zwischen der dritten Linseneinheit (U3) und der Relaislinse (UR) angeordnet ist;
b) die erste Linseneinheit aus sechs Linsen zusammengesetzt ist, wobei die Linse, die der Objektseite am nächsten ist, eine positive Linse ist, und das Zoomobjektiv eine positive vierte Linseneinheit (U4) umfasst, die sich zum Zoomen bewegt und zwischen der dritten Linseneinheit (U3) und der Relaislinse (UR) angeordnet ist; oder
c) die erste Linseneinheit aus fünf Linsen zusammengesetzt ist, und das Zoomobjektiv eine positive vierte Linseneinheit (U4) umfasst, die sich zum Zoomen bewegt und zwischen der dritten Linseneinheit (U3) und der Relaislinse (UR) angeordnet ist,

2. Zoomobjektiv nach Anspruch 1, wobei eine Bedingung

$$77 < vpa < 100$$

erfüllt ist, wobei vpa einen Mittelwert von Werten der Abbe-Zahl der positiven Linsen in der ersten Linseneinheit darstellt.

3. Zoomobjektiv nach Anspruch 1 oder 2, wobei das Zoomobjektiv in der Reihenfolge von der Objektseite zur Bildseite aus der ersten Linseneinheit, der zweiten Linseneinheit, der dritten Linseneinheit, die konfiguriert ist, sich zum Zoomen zu bewegen, der vierten Linseneinheit, die konfiguriert ist, sich zum Zoomen zu bewegen, und der Relais-Linseneinheit zusammengesetzt ist.

4. Zoomobjektiv nach Anspruch 1 oder 2, wobei das Zoomobjektiv in der Reihenfolge von der Objektseite zu der Bildseite aus der ersten Linseneinheit, der zweiten Linseneinheit, der dritten Linseneinheit, die konfiguriert ist, sich zum Zoomen zu bewegen, der vierten Linseneinheit, die konfiguriert ist, sich zum Zoomen zu bewegen, der fünften Linseneinheit, die konfiguriert ist, sich zum Zoomen zu bewegen, und der Relais-Linseneinheit zusammengesetzt ist.

5. Zoomobjektiv nach einem der Ansprüche 1 bis 4, wobei eine Bedingung

$$3{,}1 \times 10^{-3} < (\theta p2 - \theta n2) / (vn2 - vp2) < 6{,}0 \times 10^{-3},$$

erfüllt ist, wobei vp2 und θp2 jeweils die Abbe-Zahl und ein Teildispersionsverhältnis einer positiven Linse darstellen, deren Abbe-Zahl die kleinste der Abbe-Zahl von positiven Linsen ist, die in der zweiten Linseneinheit enthalten sind, und vn2 und θn2 jeweils die Abbe-Zahl und ein Teildispersionsverhältnis einer negativen Linse darstellen, deren Abbe-Zahl die kleinste der Abbe-Zahl von negativen Linsen ist, die in der zweiten Linseneinheit enthalten sind, wobei das Teildispersionsverhältnis θ durch einen Ausdruck

$$\theta = (Ng - NF) / (NF - NC)$$

ausgedrückt wird, wobei Ng einen Brechungsindex in Bezug auf eine g-Linie von Fraunhofer-Linien darstellt,

6.  Zoomobjektiv nach einem der Ansprüche 1 bis 5, wobei eine Bedingung

$$3 < |f1 / f2| < 9$$

erfüllt ist, wobei f2 eine Brennweite der zweiten Linseneinheit darstellt.

7.  Bildaufnahmevorrichtung, umfassend:

    das Zoomobjektiv nach einem der Ansprüche 1 bis 6; und
    ein Bildaufnahmeelement, das konfiguriert ist, um ein durch das Zoomobjektiv gebildetes Bild zu empfangen.

**Revendications**

1.  Objectif à focale variable comprenant, dans un ordre allant d'un côté objet à un côté image :

    une première unité à lentilles (U1) ayant un pouvoir de réfraction positif et configurée pour ne pas se déplacer pour la variation de focale ; une deuxième unité à lentilles (U2) ayant un pouvoir de réfraction négatif et configurée pour se déplacer vers le côté image pour la variation de focale d'une extrémité grand angle à une extrémité téléobjectif ; une troisième unité à lentilles (U3) configurée pour se déplacer pour la variation de focale ; et une unité à lentilles relais (UR) ayant un pouvoir de réfraction positif et configurée pour ne pas se déplacer pour la variation de focale,
    dans lequel la première unité à lentilles est constituée de cinq ou six lentilles comprenant, dans un ordre allant du côté objet au côté image, une lentille négative, une lentille positive, une lentille positive, une lentille positive et une lentille positive, et les expressions conditionnelles

$$1,79 < Nn < 1,91,$$

et

$$1,53 < |fn /f1| < 2,0$$

sont satisfaites, où Nn représente un indice de réfraction de la lentille négative dans la première unité à lentilles, fn représente une longueur focale de la lentille négative, et f1 représente une longueur focale de la première unité à lentilles,
**caractérisé en ce qu'**en outre, les expressions conditionnelles

$$39 < vn < 48,$$

et

$$2,24 < Nn+0,01 \text{ x } vn < 2,32$$

sont satisfaites, où vn représente un nombre d'Abbe de la lentille négative, le nombre d'Abbe v étant exprimé par une expression

$$\nu = (Nd - 1) / (NF - NC)$$

où NF, Nd et NC représentent respectivement des indices de réfraction par rapport à une raie F, une raie d et une raie C des raies de Fraunhofer, et dans lequel ladite troisième unité à lentilles (U3) présente une puissance négative, et dans lequel, soit

a) ladite première unité à lentilles est constituée de six lentilles, la lentille la plus proche du côté objet est une lentille positive, et ledit objectif à focale variable comprend une quatrième unité à lentilles négative (U4) qui se déplace pour la variation focale et une cinquième unité à lentilles positive (U5) qui se déplace pour la variation focale, agencées dans cet ordre du côté objet vers le côté image entre ladite troisième unité à lentilles (U3) et ladite lentille relais (UR) ;

b) ladite première unité à lentilles est constituée de six lentilles, la lentille la plus proche du côté objet est une lentille positive, et ledit objectif à focale variable comprend une quatrième unité à lentilles positive (U4) qui se déplace pour la variation de focale et est agencée entre ladite troisième unité à lentilles (U3) et ladite lentille relais (UR) ; ou

c) ladite première unité à lentilles est composée de cinq lentilles, et ledit objectif à focale variable comprend une quatrième unité à lentilles positive (U4) qui se déplace pour la variation de focale et est agencée entre ladite troisième unité à lentilles (U3) et ladite lentille relais (UR) .

**2.** Objectif à focale variable selon la revendication 1, dans lequel une expression conditionnelle

$$77 < \nu pa < 100$$

est satisfaite, où vpa représente une moyenne de valeurs du nombre d'Abbe des lentilles positives de la première unité à lentilles.

**3.** Objectif à focale variable selon la revendication 1 ou 2, dans lequel l'objectif à focale variable est constitué, dans un ordre allant du côté objet au côté image, de la première unité à lentilles, de la deuxième unité à lentilles, de la troisième unité à lentilles configurée pour se déplacer pour la variation de focale, de la quatrième unité à lentilles configurée pour se déplacer pour la variation de focale, et de l'unité à lentilles relais.

**4.** Objectif à focale variable selon la revendication 1 ou 2, dans lequel l'objectif à focale variable comprend, dans un ordre allant du côté objet au côté image, la première unité à lentilles, la deuxième unité à lentilles, la troisième unité à lentilles configurée pour se déplacer pour la variation de focale, la quatrième unité à lentilles configurée pour se déplacer pour la variation de focale, et l'unité à lentilles relais.

**5.** Objectif à focale variable selon l'une quelconque des revendications 1 à 4, dans lequel une expression conditionnelle

$$3,1 \times 10^{-3} < (\theta p2 - \theta n2)/(\nu n2 - \nu p2) < 6,0 \times 10^{-3},$$

est satisfaite, où vp2 et θp2 représentent respectivement le nombre d'Abbe et un rapport de dispersion partielle d'une lentille positive présentant le nombre d'Abbe le plus petit parmi les nombres d'Abbe des lentilles positives comprises dans la deuxième unité à lentilles, et vn2 et θn2 représentent respectivement le nombre d'Abbe et un rapport de dispersion partielle d'une lentille négative présentant le nombre d'Abbe le plus petit parmi les nombres d'Abbe des lentilles négatives comprises dans la deuxième unité à lentilles, le rapport de dispersion partielle θ étant exprimé par une expression

$$\theta = (Ng - NF)/(NF - NC),$$

où Ng représente un indice de réfraction par rapport à une raie g des raies de Fraunhofer.

6. Objectif à focale variable selon l'une quelconque des revendications 1 à 5, dans lequel une expression conditionnelle

$$3 < |f1 / f2| < 9$$

est satisfaite, où f2 représente une distance focale de la deuxième unité à lentilles.

7. Appareil de capture d'image comprenant :

l'objectif à focale variable selon l'une quelconque des revendications 1 à 6 ; et
un élément de capture d'image configuré pour recevoir une image formée par l'objectif à focale variable.

FIG. 1

## FIG. 2A

M — — — S ———

e ———
g — — — —
C — ·· — ·· —

Fno=2.1          ω=26.6°          ω=26.6°          ω=26.6°

-0.400        0.400     -0.400        0.400     -5.000        5.000     -0.050        0.050

SPHERICAL
ABERRATION

ASTIGMATISM

DISTORTION (%)

CHROMATIC
ABERRATION OF
MAGNIFICATION

## FIG. 2B

M — — — S ———

e ———
g — — — —
C — ·· — ·· —

Fno=4.1          ω=0.716°          ω=0.716°          ω=0.716°

-0.400        0.400     -0.400        0.400     -5.000        5.000     -0.050        0.050

SPHERICAL
ABERRATION

ASTIGMATISM

DISTORTION (%)

CHROMATIC
ABERRATION OF
MAGNIFICATION

EP 3 351 986 B1

## FIG. 3

## FIG. 4A

M — — — S ——————

e ——————
g — — — —
C — — — —

Fno=2.1    ω=26.6°    ω=26.6°    ω=26.6°

-0.400    0.400    -0.400    0.400    -5.000    5.000    -0.050    0.050

SPHERICAL ABERRATION

ASTIGMATISM

DISTORTION (%)

CHROMATIC ABERRATION OF MAGNIFICATION

## FIG. 4B

M — — — S ——————

e ——————
g — — — —
C — — — —

Fno=4.1    ω=0.716°    ω=0.716°    ω=0.716°

-0.400    0.400    -0.400    0.400    -5.000    5.000    -0.050    0.050

SPHERICAL ABERRATION

ASTIGMATISM

DISTORTION (%)

CHROMATIC ABERRATION OF MAGNIFICATION

FIG. 5

EP 3 351 986 B1

## FIG. 6A

M — — — S ———

e ———
g — — —
C — · — ·

Fno=2.1

ω=26.6°

ω=26.6°

ω=26.6°

-0.400          0.400
SPHERICAL
ABERRATION

-0.400          0.400
ASTIGMATISM

-5.000          5.000
DISTORTION (%)

-0.050          0.050
CHROMATIC
ABERRATION OF
MAGNIFICATION

## FIG. 6B

M — — — S ———

e ———
g — — —
C — · — ·

Fno=4.1

ω=0.716°

ω=0.716°

ω=0.716°

-0.400          0.400
SPHERICAL
ABERRATION

-0.400          0.400
ASTIGMATISM

-5.000          5.000
DISTORTION (%)

-0.050          0.050
CHROMATIC
ABERRATION OF
MAGNIFICATION

# FIG. 7

EP 3 351 986 B1

## FIG. 8A

M – – – S ——
e ——
g – – – –
C – · – · –

Fno=2.1 | ω=26.6° | ω=26.6° | ω=26.6°

-0.400 ——— 0.400
SPHERICAL
ABERRATION

-0.400 ——— 0.400
ASTIGMATISM

-5.000 ——— 5.000
DISTORTION (%)

-0.050 ——— 0.050
CHROMATIC
ABERRATION OF
MAGNIFICATION

## FIG. 8B

M – – – S ——
e ——
g – – – –
C – · – · –

Fno=4.1 | ω=0.716° | ω=0.716° | ω=0.716°

-0.400 ——— 0.400
SPHERICAL
ABERRATION

-0.400 ——— 0.400
ASTIGMATISM

-5.000 ——— 5.000
DISTORTION (%)

-0.050 ——— 0.050
CHROMATIC
ABERRATION OF
MAGNIFICATION

FIG. 9

## FIG. 10A

M — — — S ———

e ———
g — — —
C — ·· —

Fno=2.1          ω=26.6°          ω=26.6°          ω=26.6°

-0.400        0.400    -0.400        0.400    -5.000        5.000    -0.050        0.050

SPHERICAL
ABERRATION          ASTIGMATISM          DISTORTION (%)          CHROMATIC
ABERRATION OF
MAGNIFICATION

## FIG. 10B

M — — — S ———

e ———
g — — —
C — ·· —

Fno=4.1          ω=0.716°          ω=0.716°          ω=0.716°

-0.400        0.400    -0.400        0.400    -5.000        5.000    -0.050        0.050

SPHERICAL
ABERRATION          ASTIGMATISM          DISTORTION (%)          CHROMATIC
ABERRATION OF
MAGNIFICATION

FIG. 11

EP 3 351 986 B1

## FIG. 12A

M − − − S ——

e ——
g − − −
C — ·· —

Fno=1.8    ω=28.8°    ω=28.8°    ω=28.8°

-0.400    0.400
SPHERICAL
ABERRATION

-0.400    0.400
ASTIGMATISM

-5.000    5.000
DISTORTION (%)

-0.050    0.050
CHROMATIC
ABERRATION OF
MAGNIFICATION

## FIG. 12B

M − − − S ——

e ——
g − − −
C — ·· —

Fno=4.2    ω=0.394°    ω=0.394°    ω=0.394°

-0.400    0.400
SPHERICAL
ABERRATION

-0.400    0.400
ASTIGMATISM

-5.000    5.000
DISTORTION (%)

-0.050    0.050
CHROMATIC
ABERRATION OF
MAGNIFICATION

FIG. 13

EP 3 351 986 B1

## FIG. 14A

Fno=1.91
SPHERICAL ABERRATION
-0.400   0.400

M — — — S ———
ω=34.5°
ASTIGMATISM
-0.400   0.400

ω=34.5°
DISTORTION (%)
-5.000   5.000

e ———
g — — —
C — ·· —
ω=34.5°
CHROMATIC ABERRATION OF MAGNIFICATION
-0.050   0.050

## FIG. 14B

Fno=2.5
SPHERICAL ABERRATION
-0.400   0.400

M — — — S ———
ω=2.32°
ASTIGMATISM
-0.400   0.400

ω=2.32°
DISTORTION (%)
-5.000   5.000

e ———
g — — —
C — ·· —
ω=2.32°
CHROMATIC ABERRATION OF MAGNIFICATION
-0.050   0.050

# FIG. 15

**EP 3 351 986 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011081063 A

- US 20120218645 A1